# EUROPEAN PATENT APPLICATION

(11) **EP 3 383 052 A1**
(43) Date of publication of application: **03.10.2018**
(21) Application number: 16868593.1
(22) Date of filing: 24.11.2016
(51) Int. Cl.: H04N 21/274, G06K 7/14, H04N 21/4223

(54) **CONTENT MANAGEMENT SYSTEM, AND CONTENT MANAGEMENT METHOD**

(30) Priority: 25.11.2015 JP 2015229374
(71) Applicant: Uxent Inc., Chiyoda-ku, Tokyo 102-0082 (JP)
(72) Inventor: NAGATOMI Yasutaka, Tokyo 102-0082 (JP)
(74) Representative: Vossius & Partner Patentanwälte Rechtsanwälte mbB
(86) International application number: PCT/JP2016/084730
(87) International publication number: WO 2017/090650

(57) **Abstract**

Provided is a content management system in which a card may be associated with a predetermined content by a content provider, specifically, a card 10 is read by the content provider with an imaging device of a content registration terminal 20 and a code as obtained and a content 5 are transmitted to a content management server 40 so that the card and the content 5 are associatively stored in a content management table 461, and meanwhile, the card 10 is read by a content viewer with an imaging device of a content viewing terminal 30 and the code as obtained is transmitted to the content management server 40 so that the content 5 associated with the card is reproduced.

## Description

### TECHNICAL FIELD

The present invention relates to a content management system which associatively manages a content and a medium such as a card.

### BACKGROUND ART

Conventionally, known is a content management system which manages that a created content is uploaded to a server to allow unspecified (or specified) viewers to view it.

In addition, Patent Document 1 discloses an information providing system in which, when an access is made based on identification information written on a business card or the like, profile information corresponding to the identification information can be received.

Still further, Patent Document 2 discloses an information providing system in which, when a user terminal reads a code printed on a product and transmits the code together with the identification information of the user to a server, the server calculates an expiration date of access to content information at the first time of receiving a combination of the code and the identification information, and meanwhile, the server transmits the content information or the like corresponding to the combination as received to the user terminal as long as the combination is received within the expiration date at the second time or later of receiving the combination.

### Citation List

### Patent Literature

[Patent Literature 1] Japanese Unexamined Patent Application Publication No. 2007-149020
[Patent Literature 2] Japanese Patent No. 4892376

### SUMMARY OF INVENTION

### Technical Problem

However, a configuration that a content provider acquires a card to which predetermined identification data is given in advance to associate a predetermined content with the card and allow a content viewer who received the card to view the content as associated has not been proposed so far.

Further, a system in which effective measures are taken to prevent the card from being falsified when identification data attached to the card is embedded in the code displayed on the card has also not been proposed so far.

Furthermore, a system in which a content provider can collectively associate a content with a plurality of cards has also not been present so far.

Therefore, it is an object of the present invention to provide a content management system in which a content provider can associate a card to which predetermined identification data is given in advance with a predetermined content.

Further, it is another object of the present invention to provide a content management system in which it is possible to effectively prevent a card from being falsified when identification data attached to the card is embedded in the code displayed on (included in) the card.

Still further, it is another object of the present invention to provide a content management system in which a content provider can collectively associate a content with a plurality of cards with easy operation.

### Solution to Problem

A first aspect of the present invention provides a content management system (for example, a content management system 1) comprising: a first user terminal (for example, a content registration terminal 20) in use by a first user (for example, a content provider); and a content management server (for example, a content management server 40) connected via a network to the first user terminal, the content management server comprising: medium-related data storage means (for example, a content management table 461) of having stored medium-related data (for example, a URL) corresponding to each medium (for example, a card 10) capable of associating a content (for example, a content 5) therewith before performing association between the content and the medium; first data receiving means (for example, a content registration management unit 452) of receiving first data (for example, first data 6), the first data being obtained from the medium, from the first user terminal; medium determination means (for example, a medium determination management unit 454 of the content management server) of determining normality of the medium under conditions including a condition that a code (for example, the URL included in the first data) obtained from the first data matches with one of the medium-related data stored in the medium-related data storage means; and content management means (for example, the content registration management unit 452 of the content management server 40) of controlling the content designated by the first user to associate with any medium corresponding to the medium-related data matching with the code obtained from the first data in accordance with registration instruction of the first user to be provided from the first user terminal, wherein the medium has a physical shape and is provided to the first user in a state that the content is not associated therewith.

With such a configuration according to the first aspect of the present invention, the content provider can easily associate the card to which the predetermined identification data is given in advance with the content as designated.

A second aspect of the present invention provides the content management system according to the first aspect, wherein the content management server further comprises: second data receiving means (for example, a content reproduction management unit 453 of the content management server 40) of receiving second data (for example, second data 7), the second data being obtained from the medium by a second user terminal (for example, a content viewing terminal 30) in use by a second user (for example, a content viewer) different from the first user, from the second user terminal; and content transmitting means (for example, the content reproduction management unit 453 of the content management server 40) of, when a code obtained from the second data matches with one of the medium-related data stored in the medium-related data storage means, transmitting the content associated with the medium corresponding to the medium-related data as matched to the second user terminal for reproduction.

With such a configuration according to the second aspect of the present invention, the content viewer can reproduce the content by obtaining predetermined data from the card which is associated with the content.

A third aspect of the present invention provides the content management system according to the first or second aspect, wherein: the first data (for example, first data 6' in a content management system 2) are obtained by reading a medium code (for example, a code 12) from the medium (for example, a card 10'); the code obtained from the first data includes a first identification code (for example, a URL) corresponding to a first part of the first data and a second identification code (for example, decoded data) obtained based on a second part of the first data; the first part of the first data is data obtained by decoding a part of the medium code with a known decode method; and the second part of the first data is encoded data.

With such a configuration according to the third aspect of the present invention, it is possible to effectively prevent the card from being falsified when the identification data attached to the card is embedded in the code displayed on (included in) the card.

A fourth aspect of the present invention provides the content management system according to the third aspect, wherein: the first identification code of the first data is URL data; the second data (for example, first data 7') is obtained by reading the medium code from the medium and the second data is data obtained by decoding a part of the medium code with a known decode method; and the first data obtained from the first user terminal and the second data obtained from the second user terminal are different data even though they are related to the same medium.

With such a configuration according to the fourth aspect of the present invention, it is possible to effectively prevent the card from being falsified when the identification data attached to the card are embedded in the code displayed on (included in) the card.

A fifth aspect of the present invention provides the content management system according to the third aspect, wherein the content management server further comprises: first data transmission means (for example, a medium determination management unit 484 of the content management server 40') of transmitting the second part of the first data to another computer (for example, a decode server 60) so as to obtain the second identification code; and second identification code receiving means (for example, a medium determination management unit 484 of the content management server 40') of receiving the second identification code as a result of decode from the another computer.

With such a configuration according to the fifth aspect of the present invention, it is possible to effectively prevent the card from being falsified when the identification data attached to the card is embedded in the code displayed on (included in) the card.

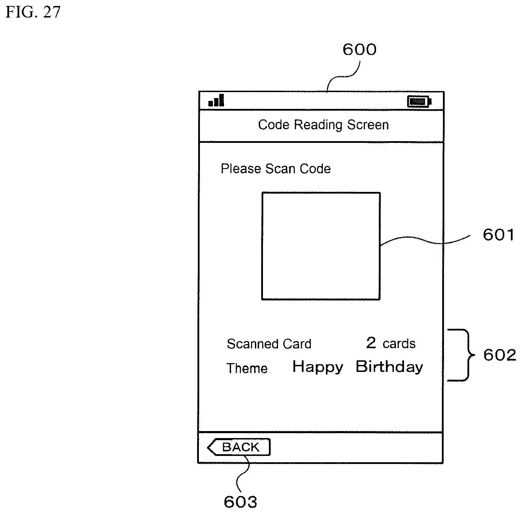

A sixth aspect of the present invention provides the content management system according to the first or second aspect, wherein: the first data is obtained by reading a medium code from the medium; and the first user terminal comprises: display means (for example, a touch screen of the content registration terminal 20) of displaying information; first data obtaining means (for example, a decode unit 254 of the content registration terminal) of obtaining the first data from the medium when reading instruction of the medium code is performed by the first user; and information display control means (for example, continuous reading is performed on a code reading screen 600 as shown in FIG. 27 with a content registration unit 252 of the content registration terminal 20) of, when the first user continuously performs the reading instruction with respect to a plurality of media, displaying at least one of the number of the media as read and medium identification information obtained based on the first data individually obtained in accordance with the reading instruction on the display means.

With such a configuration according to the sixth aspect of the present invention, the content provider can collectively associate the content with a plurality of cards with easy operation.

A seventh aspect of the present invention provides the content management system according to the sixth aspect, wherein: the first user terminal transmits, when the first user performs the registration instruction, a plurality of first data corresponding to the media as continuously read and the content designated by the first user in association with each other to the content management server.

With such a configuration according to the seventh aspect of the present invention, the content provider can collectively associate the content with a plurality of cards with easy operation.

An eighth aspect of the present invention provides the content management system according to the first or second aspect, wherein: the medium is classified in accordance with a plurality of first types (for example, card type, theme or model number); and the content management server further comprises: first type determination means of, when the first data obtained by the first user terminal is received by the first data receiving unit of the content management server, determining the first type of the medium based on the first data; and content-related data control means of controlling content-related data corresponding to the first type determined by the first type determination means to be available in the first user terminal (for example, downloading a skin or the like to the first user terminal or enabling it to be designated or selected by the first terminal).

With such a configuration according to the eighth aspect of the present invention, since the corresponding skin or the like is provided to the content registration terminal in accordance with the card type as read, it is possible to improve convenience in creating work of the content provider.

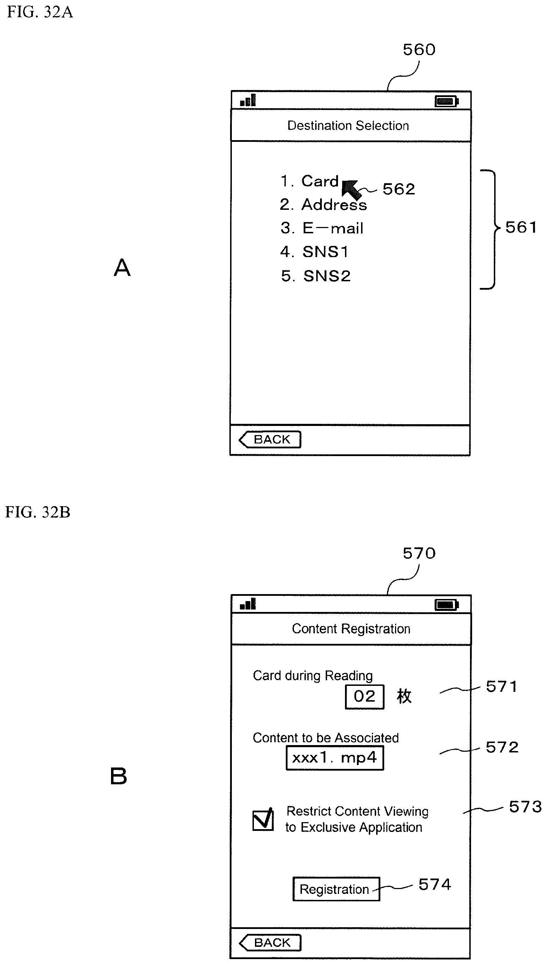

A ninth aspect of the present invention provides the content management system according to the second aspect, wherein: the content associated with the medium is reproduced under a reproduction condition designated by the first user at the time of the registration instruction (for example, as shown in FIG. 32B, designated whether or not content viewing in the content viewing terminal 30 is restricted to that with a particular application); and the content management server further comprises: reproduction condition determination means of, when the second data obtained by the second user terminal is received by the second data receiving unit of the content management server, determining the reproduction condition of the content associated with the medium based on the second data; and content reproduction control means of performing control to change the reproduction condition of the content in the second user terminal in accordance with the reproduction condition determined by the reproduction condition determination means.

With such a configuration according to the ninth aspect of the present invention, since the reproduction condition of the content viewing terminal is controlled in accordance with the reproduction condition of the content set by the content provider, the content provider can control the reproduction condition at the time of content reproduction.

A tenth aspect of the present invention provides the content management system according to the second aspect, wherein: the content associated with the medium is classified into a plurality of second types (for example, content types), the content management server further comprises, second type determination means of, when the second data obtained by the second user terminal is received by the second data receiving unit of the content management server, determining the second type of the content associated with the medium based on the second data, content reproduction control means of performing control to change the reproduction condition (for example, whether or not content viewing in the content viewing terminal 30 is restricted to that with a particular application) of the content in the second user terminal in accordance with the second type determined by the second type determination means.

With such a configuration according to the tenth aspect of the present invention, since the reproduction condition of the content viewing terminal is controlled in accordance with the content type, it is possible to control the condition under which the reproduction is performed for each content.

An eleventh aspect of the present invention provides a content management method of being executed in a content management system comprising a content management server connected to a first user terminal used by a first user via a network, the content management server comprising medium-related data storage means of having stored medium-related data corresponding to each medium capable of associating a content therewith before performing association between the content and the medium, the method comprising in the content management server: a first data receiving step of receiving first data, the first data being obtained from the medium, from the first user terminal; a medium determination step of determining normality of the medium under conditions including a condition that a code obtained from the first data matches with one of the medium-related data stored in the medium-related data storage means; and a content management step of controlling the content designated by the first user to associate with any medium corresponding to the medium-related data matching with the code obtained from the first data in accordance with registration instruction of the first user to be provided from the first user terminal, wherein the medium has a physical shape and is provided to the first user in a state that the content is not associated therewith.

With such a configuration according to the eleventh aspect of the present invention, the content provider can easily associate the card to which the predetermined identification data is given in advance with the content as designated.

### Advantageous Effects of Invention

With the content management system according to the present invention, the content provider can associate the card to which the predetermined identification data is given in advance with the predetermined content.

Further, with the content management system according to the present invention, it is possible to effectively prevent a card from being falsified when identification data attached to the card is embedded in the code displayed on (included in) the card.

Still further, with the content management system according to the present invention, the content provider can collectively associate the content to the plurality of cards with easy operation.

### BRIEF DESCRIPTION OF DRAWINGS

FIG. 1 is a schematic diagram for explaining an outline of processing of a content management system 1 according to a First Embodiment of the present invention.
FIG. 2 is a schematic diagram showing a pattern of a content registration procedure in the content management system 1 according to the First Embodiment of the present invention.
FIG. 3A is a schematic diagram showing another pattern of the content registration procedure in the content management system 1 according to the First Embodiment of the present invention.
FIG. 3B is a schematic diagram showing another pattern of the content registration procedure in the content management system 1 according to the First Embodiment of the present invention.
FIG. 4 is a schematic diagram showing a classification of cards used in the content management system 1 according to the First Embodiment of the present invention.
FIG. 5 is a schematic diagram showing an example of a hardware configuration of a content registration terminal of the content management system 1 according to the First Embodiment of the present invention.
FIG. 6 is a schematic diagram showing an example of a hardware configuration of a content management server of the content management system 1 according to the First Embodiment of the present invention.
FIG. 7 is a functional block diagram of the content registration terminal of the content management system 1 according to the First Embodiment of the present invention.
FIG. 8 is a functional block diagram of the content management server of the content management system 1 according to the First Embodiment of the present invention.
FIG. 9A is a schematic diagram for explaining a database of the content management system 1 according to the First Embodiment of the present invention.
FIG. 9B is a schematic diagram for explaining a database of the content management system 1 according to the First Embodiment of the present invention.
FIG. 10 is a schematic diagram for explaining a database of the content management system 1 according to the First Embodiment of the present invention.
FIG. 11 is a schematic diagram for explaining content registration in the content management system 1 according to the First Embodiment of the present invention.
FIG. 12 is a flowchart showing a content registration procedure in the content management system 1 according to the First Embodiment of the present invention.
FIG. 13 is a schematic diagram for explaining an outline of processing of a content management system 2 according to a Second Embodiment of the present invention.
FIG. 14 is a schematic diagram showing a form of a code displayed on a card used in the content management system 2 according to the Second Embodiment of the present invention.
FIG. 15 is a functional block diagram of a content registration terminal of the content management system 2 according to the Second Embodiment of the present invention.
FIG. 16 is a functional block diagram of a content management server of the content management system 2 according to the Second Embodiment of the present invention.
FIG. 17 is a functional block diagram of a decode server of the content management system 2 according to the Second Embodiment of the present invention.
FIG. 18 is a schematic diagram for describing a database of a content management system 2 according to the Second Embodiment of the present invention.
FIG. 19 is a schematic diagram for explaining content registration in the content management system 2 according to the Second Embodiment of the present invention.
FIG. 20 is a flowchart showing a content registration procedure in the content management system 2 according to the Second Embodiment of the present invention.
FIG. 21 is a flowchart showing a content registration procedure in the content management system 2 according to the Second Embodiment of the present invention.
FIG. 22 is a functional block diagram of a content viewing terminal of the content management system according to either Embodiment of the present invention.
FIG. 23 is a schematic diagram for explaining content viewing in the content management system according to either Embodiment of the present invention.
FIG. 24 is a flowchart showing a content viewing procedure in the content management system according to either Embodiment of the present invention.
FIG. 25 is a flowchart showing another content viewing procedure in the content management system according to either Embodiment of the present invention.
FIG. 26 is a flowchart showing another content viewing procedure in the content management system according to either Embodiment of the present invention.
FIG. 27 is a schematic diagram showing a code reading screen for continuously reading cards in the content management system according to either Embodiment of the present invention.
FIG. 28 is a flowchart showing a procedure of continuous card reading processing in the content management system according to either Embodiment of the present invention.
FIG. 29A is a schematic diagram showing a screen for explaining an operation from creating/editing content to registration in the content management system according to either Embodiment of the present invention.
FIG. 29B is a schematic diagram showing a screen for explaining an operation from creating/editing content to registration in the content management system according to either Embodiment of the present invention.
FIG. 30A is a schematic diagram showing a screen for explaining an operation from creating/editing content to registration in the content management system according to either Embodiment of the present invention.
FIG. 30B is a schematic diagram showing a screen for explaining an operation from creating/editing content to registration in the content management system according to either Embodiment of the present invention.
FIG. 31A is a schematic diagram showing a screen for explaining an operation from creating/editing content to registration in the content management system according to either Embodiment of the present invention.
FIG. 31B is a schematic diagram showing a screen for explaining an operation from creating/editing content to registration in the content management system according to either Embodiment of the present invention.
FIG. 32A is a schematic diagram showing a screen for explaining an operation from creating/editing content to registration in the content management system according to either Embodiment of the present invention.
FIG. 32B is a schematic diagram showing a screen for explaining an operation from creating/editing content to registration in the content management system according to either Embodiment of the present invention.

### Reference Signs List

1, 2... content management system
5... content
6, 6'...first data
7... second data
10, 10'...card
11, 12...code
20, 20'...content registration terminal
30...content viewing terminal
40, 40'... content management server
60...decode server

### DESCRIPTION OF EMBODIMENTS

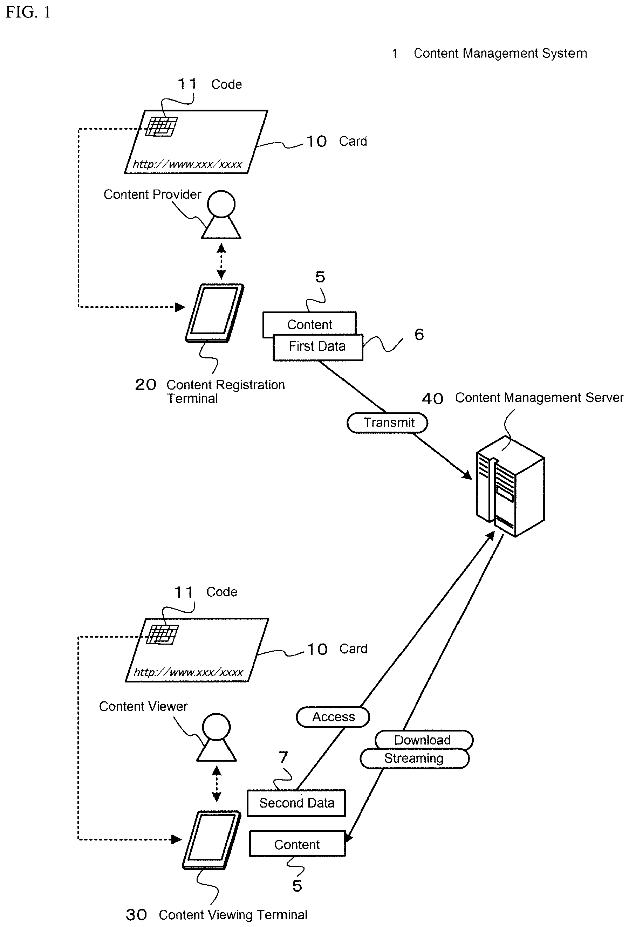

First, an outline of a content management system according to a First Embodiment of the present invention is described with reference to FIG. 1. In the content management system 1 shown in FIG. 1, a card 10 is associated with a content by a content registration terminal 20.

The content registration terminal 20 is, for example, a computer such as a smartphone, a mobile phone, a desktop personal computer or the like. The content 5 is data or a file including at least one of image and sound, which comprises a moving image, a still image, a sound, a text, or a combination thereof.

The card 10 is, for example, a card shaped like a business card or a greeting card, but any object may be used as long as it is a medium having a physical shape. The card 10 is, in principle, obtained by a user (content provider) of the content registration terminal 20 on a market or the like with a predetermined value.

Further, on the card 10, a code 11 is displayed by printing or the like. Here, the code 11 is shown as a code represented by an image, and the code 11 is read by an imaging device of the content registration terminal 20 to be converted into a bit string or a text by a decode logic. The data converted by the decode logic in this manner is referred to as first data 6. The first data 6 includes identification data to identify the card, and it is a URL in this example. Note that additional data such as parameters or the like may be included in the URL.

The content of the first data 6 is further displayed on the card 10 to visually recognize them so that it is possible to grasp which card is, as the card 10, managed by the content management system 1 or to access the content associated with the card 10 without reading the code 11 by the imaging device.

The user of the content registration terminal 20 creates and/or edits the content 5 using the content registration terminal 20, transmits the content 5 (or identification information to identify the content 5) to a content management server 40 and also transmits the first data 6 obtained by reading the above-described code 11 to the content management server 40, and then operates to associate the content 5 with the card 10 (content registration instruction).

In the above description, it is assumed that the user of the content registration terminal 20 creates and/or edits the content 5 using the content registration terminal 20. However, an existing content or a content copied from another computer may be associated with the card 10 without creating/editing the content 5 using the content registration terminal 20. Also, a content stored in the content management server 40 may be designated or selected to be associated with the card 10 as it is without transmitting the content 5 from the content registration terminal 20 to the content management server 40.

In addition, through the operation of the content registration terminal 20, it is also possible to create the content 5 by editing the content stored in the content management server 40 and associate the card 10 with the content 5 thereof.

The content registration terminal 20 and the content management server 40 are connected, for example, via a network including a wireless communication network or the Internet.

Upon receiving the content 5 and the first data 6 from the content registration terminal 20, the content management server 40 stores the content 5 in association with the received first data 6. As described above, the first data 6 can be obtained from the code 11 displayed on the card 10 and includes the identification data capable of uniquely identifying the card 10.

When a user (content viewer) of a content viewing terminal 30 who has received the card 10 in some circumstances allows the content viewing terminal 30 to read the code 11 of the card 10 and obtains second data 7 from the code 11. The second data 7 is, for example, the URL same to that of the first data 6, and the content viewing terminal 30 makes access based on the URL. The content viewing terminal 30 is, for example, a computer such as a smartphone, a mobile phone, a desktop personal computer or the like.

Upon receiving the access to the URL from the content viewing terminal 30, the content management server 40 downloads the data to the content viewing terminal 30 so that the content 5 corresponding to the URL can be reproduced. Further, in response to the access to the URL, the content management server 40 can also transmit the data of the content 5 to the content viewing terminal 30 so as to make possible streaming reproduction by the content viewing terminal 30. In addition, the content 5 can be reproduced in various ways. In this case, the content viewing terminal 30 and the content management server 40 are connected via, for example, a network including a wireless communication network or the Internet.

In an example shown in FIG. 1, the content management server 40 functions as a WEB server which receives a HTTP request from the content viewing terminal 30 and transmits the data of the requested content 5 to the content viewing terminal 30 (that is, the URL includes a domain name associated with an IP address of the content management server 40). However, such a configuration is merely an example, and another computer other than the content management server 40 may be handled as a WEB server. Further, the above configuration may be realized by using a method of network access without using a URL or a WEB server.

An image code like the code 11 as described above is, for example, a two-dimensional code such as a QR code (registered trademark), and the code 11 is read by the imaging device of the content registration terminal 20 or the content viewing terminal 30 and after that is decoded to extract a bit string or a text.

With such a mechanism according to the First Embodiment of the present invention, the user of the content registration terminal 20 can associate the content 5 with the card 10 only by reading the code 11 of the card 10, and the user of the content viewing terminal 30 who received the card 10 can view the corresponding content 5 only by allowing the content viewing terminal 30 to read the code 11 displayed on the card 10.

Such a mechanism according to the First Embodiment of the present invention may be used, for example, when mailing a birthday card, a message card of appreciation, a Xmas card or the like, or when mailing an invitation card to a guest or handing over a thank-you card to a participant in a party, a meeting or the like. Since information (i.e., the code 11) for viewing the content 5 is printed on these cards and the content 5 can be reproduced by simple operation, it is possible to convey to the content viewer a message through the content 5 having high expression power together with a pattern, a figure, a message or the like displayed on the card. With such a mechanism, the content provider can let a particular person view the content 5 by simple operation.

Since the card 10 is provided to the content viewer as a medium having a predetermined physical shape, it is possible to limit the content viewers in a narrower range as compared with a situation in which a code for viewing the content is distributed as an electronic medium (for example, a case in which information for viewing the content is described in e-mail or the like). For example, when an address of the content is distributed by e-mail or the like, such information is forwarded to another person or disclosed on SNS, and thus many unintended content viewers can easily view the content and a special mechanism is required on the system in order to prevent this. However, as the First Embodiment of the present invention, when information for viewing the content is provided by a medium having a predetermined physical shape, the possibility that unintended content viewer views the content becomes smaller.

In addition, in such a mechanism according to the First Embodiment of the present invention, since information for viewing the content is provided in a form that is displayed on an object (a medium having a predetermined physical shape), it is possible to position the content 5 as a heartful gift for an individual due to not electronically distributing.

In the content management system according to the First Embodiment of the present invention, it is possible to view the content 5 not only by an exclusive application installed in the content viewing terminal 30 but also by a universal WEB browser. Although either the first data 6 or the second data 7 is URL in this example, it is possible to uniquely identify the card 10 using identification information other than URL. However, when identification information other than URL is used as the first data 6 and the second data 7, the content 5 cannot be viewed by a WEB browser of the content viewing terminal 30.

Although, in the example shown in FIG. 1, the card 10 is shown representing the code 11 in a two-dimensional code of an image, the first data 6 or the second data 7 may be obtained using other various types of cards. For example, it is possible to configure the card 10 as an IC card and finally obtain the first data 6 and the second data 7 by reading the IC card. An IC chip readable with a noncontact IC card reader/writer is embedded in the card 10 like this, and the first data 6 or the second data 7 (or data including the first data 6 and the second data 7) is stored in the IC chip, respectively. In this case, the content provider reads the data stored in the IC chip by the noncontact IC card reader/writer of the content registration terminal 20, and the content viewer reads the data stored in the IC chip by the noncontact IC card reader/writer of the content viewing terminal 30.

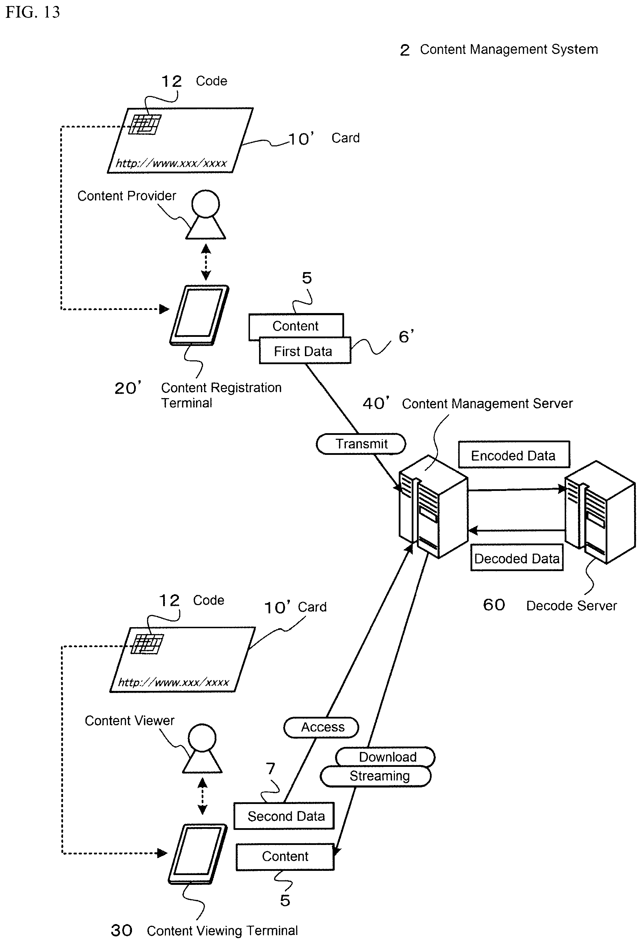

It should be noted that various types of cards as described above may be similarly used in the content management system 2 (see FIG. 13 and others) which is described later.

Next, several patterns of content registration procedures in the content management system 1 according to the First Embodiment of the present invention is described.

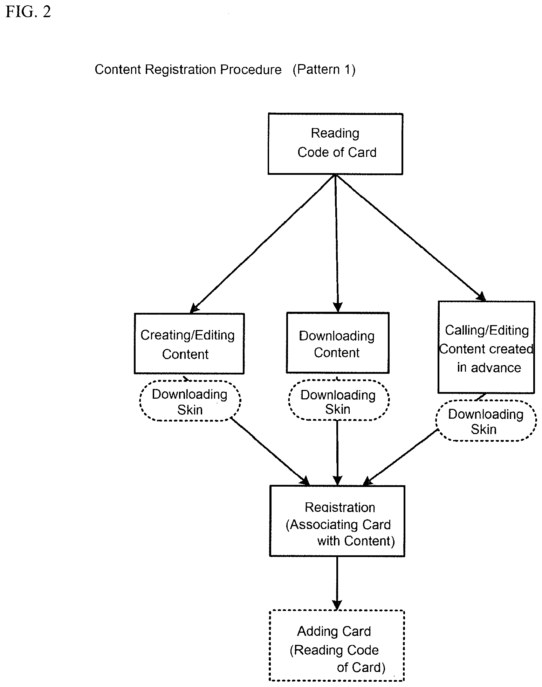

A pattern 1 which is a general content registration procedure is shown in FIG. 2. In the procedure of the pattern 1, when the content provider gets the card 10, he/she photographs it with a camera of his/her own smartphone or the like (content registration terminal 20) to read the code 11 of the card 10 and create and/or edit a content to be associated with the card 10. Here, the content provider shoots a moving image, sets an effect, inputs a text, designates music, and thus creates the content 5 to be associated with the card 10. Also, at this time, a skin may be downloaded from the content management server 40. The skin is a design of the card and includes content materials (content-related data) such as frames, opening movies, movies for material, background images or the like.

Also, the skin is provided in different kinds according to card types of the card 10 (that is, according to the content of the first data 6 transmitted to the content management server 40 as a result of reading the code 11 of the card 10). Furthermore, several candidates are indicated depending on card types of the card 10, and the content provider can also select a desired skin, a frame, etc. from among them.

In FIG. 2, further, other procedures of creating the content 5 are shown. For example, it is possible to select an existing content from the content management server 40 and designate it as the content 5 as it is. At this time, it is possible to selectively download the aforementioned skin to be combined with the existing content.

Further, the content provider can call up a content created in advance and additionally edit it to make the content 5. At this time also, it is possible to selectively download the aforementioned skin to be combined with the called content.

Upon completing creating the content, the content provider issues the content registration instruction and associates the created content 5 with the card 10. Thereafter, if necessary, it is possible to read the code 11 of another card 10 to be additionally associated with the same content 5.

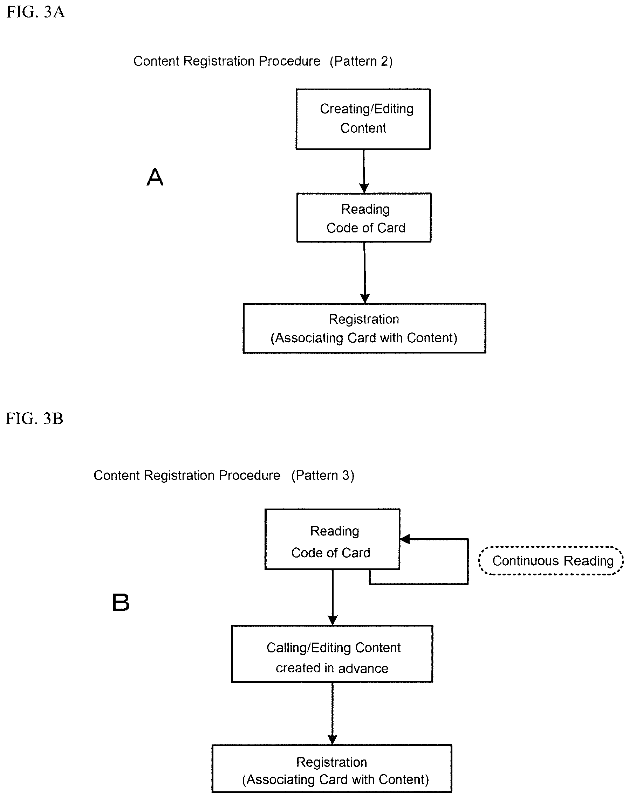

In FIG. 3A, a pattern 2 which is another content registration procedure is shown. In the pattern 2, the content provider first creates and/or edits the content using the content registration terminal 20, and thereafter he/she reads the code 11 of the card 10 and associates the content 5 with the card 10 to perform the content registration instruction.

In FIG. 3B, a pattern 3 which is still another content registration procedure is shown. In the pattern 3, the content provider has a plurality of cards 10 in hand, and firstly allows the content registration terminal 20 to continuously read each code 11 of the cards 10. Next, he/she calls up a content created in advance and favorably edits it to make the content 5, thereafter the content 5 and the plurality of cards 10 continuously read are collectively registered. In this case, the same content 5 is associated with each of the plurality of cards 10. In addition, at the time of the content registration instruction, it is also possible to instruct a part of cards 10 continuously read to be associated with one content 5 and the remaining cards 10 to be associated with other content 5.

Further, in the pattern 2 shown in FIG. 3A, it is possible to continuously read each code 11 of the cards 10 in the same manner as shown in FIG. 3B to instruct the plurality of cards to be associated with the content 5. In addition, at this time, it is also possible to be configured to download and register one skin or a skin corresponding to each read code 11.

Although the content registration procedure has been described with reference to FIG. 2 and FIG. 3, these are merely examples, and it is possible to operate to associate the card 10 with the content 5 by many other patterns.

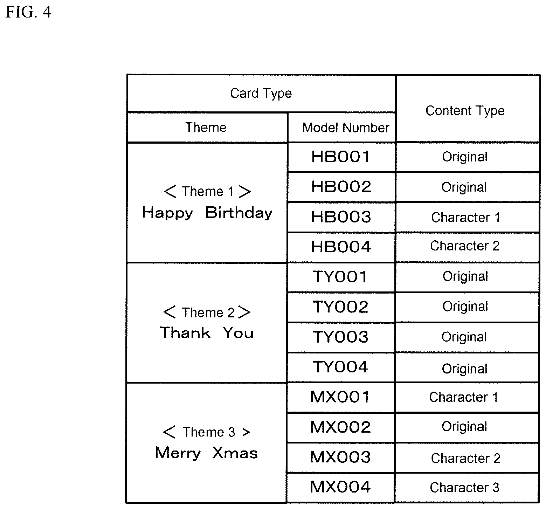

Next, the classification of the card 10 to be used in the content management system 1 according to the First Embodiment of the present invention is described with reference to FIG. 4.

The cards 10 of a plurality of themes as shown in FIG. 4, for example, are provided as the cards 10 available to the content provider. The themes are related to, for example, "Happy Birthday", "Thank You", "Merry Xmas", and model numbers are set for the themes, respectively. That is, in this example, there are four types of cards 10 in each theme, and the content provider can select and purchase a desired card(s) among these cards 10. Here, a combination of the theme and the model number is referred to as a card type (if the model number is unique throughout the model numbers, the model number itself may be regarded as the card type). The above-described skins may be provided in different kinds depending on such card type.

A content type indicates what content is associated with each of the cards 10. The card 10 which is set to be "original" is capable of being associated with the content 5 created and/or edited by the content provider himself/herself. The card 10 which is set to be "character 1" or "character 2" is capable of being associated with a predetermined character at least as part of the content 5.

The card 10 usable in the content management system 1 according to the First Embodiment of the present invention is in principle provided to the content provider for a fee. The above-described card 10 capable of being associated with a predetermined character is set in a price so that a usage fee (license fee) is further added thereto according to eminence, market value or popularity of the character.

Regarding the card 10 capable of being associated with a predetermined character, it is possible to set a moving image or the like of the corresponding character as the content 5 and also to select it among several patterns or edit it. Alternatively, the card 10 may be provided in a state that a predetermined content of the character is fixedly associated from the beginning.

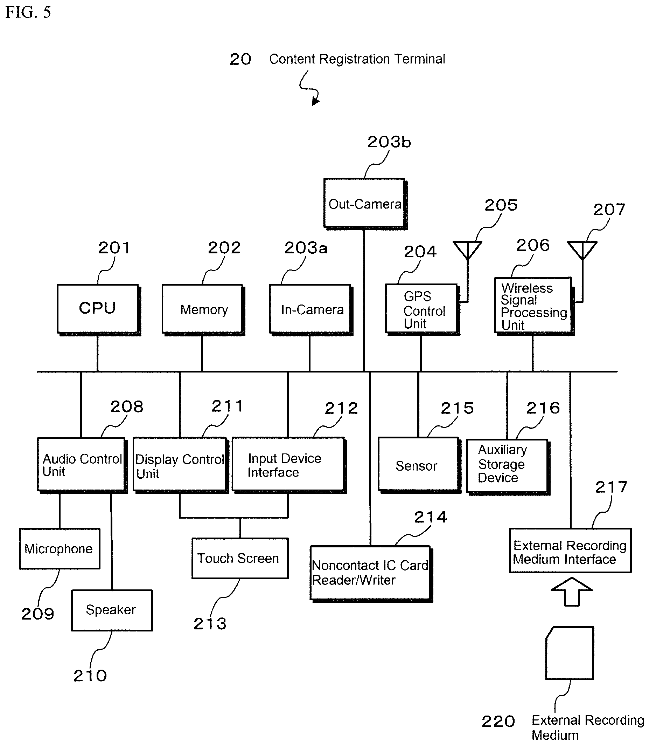

Next, an example of a hardware configuration of the content registration terminal 20 is described with reference to FIG. 5. However, the content registration terminal 20 of FIG. 5 merely exemplifies a representative configuration of a smartphone. Various other computers may be used as the content registration terminal 20.

The content registration terminal 20 includes a CPU (Central Processing Unit) 201, a memory 202, an in-camera 203a, an out-camera 203b, a GPS control unit 204, a GPS antenna 205, a wireless signal processing unit 206, a wireless communication antenna 207, an audio control unit 208, a microphone 209, a speaker 210, a display control unit 211, an input device interface 212, a touch screen 213, a noncontact IC card reader/writer 214, a sensor 215, an auxiliary storage device 216 and an external recording medium interface 217.

The CPU 201 controls operation of each component of the content registration terminal 20 and executes each function under control of OS.

The memory 202 is usually composed of a RAM (Random Access Memory). Programs of realizing each function to be executed in the CPU 201 are loaded in the memory 202 at the time of execution, and data or the like necessary for the program is temporarily stored therein.

The in-camera 203a and the out-camera 203b are small-sized imaging devices incorporated in the content registration terminal 20 and are of a type in which an imaging element is CCD or CMOS. The content 5 can be created based on moving images or still images shot by these cameras. The in-camera 203a is an inside camera provided in the vicinity of the touch screen 213, which is described later, and is usually considered as a sub-camera whose resolution is lower than that of the out camera 203b. The out-camera 203b is an outside camera provided on the opposite side of the touch screen 213, which is described later, and is usually considered as a main camera whose resolution is higher than that of the in-camera 203a.

The GPS control unit 204 receives signals from a plurality of GPSs via the GPS antenna 205 to check a position of the content registration terminal 20. The position information thus obtained is stored in the auxiliary storage device 216 or the like, which is described later, and is utilized by the program as necessary.

The wireless signal processing unit 206 performs communication with a mobile phone base station via the wireless communication antenna 207 to control transmission/reception of call data with other devices or transmission/reception of WEB pages and mail data with other terminals (via the Internet). In addition, the wireless signal processing unit 206 realizes communication by wireless LAN with a wireless LAN access point using the wireless communication antenna 207 to perform data transmission/reception via the Internet (here, for the sake of convenience, the wireless signal processing unit 206 and the wireless communication antenna 207 perform wireless communication with the mobile phone base station and wireless communication with the wireless LAN access point).

The audio control unit 208 controls the microphone 209 and the speaker 210 to realize a call through wireless communication, and while, it performs control to output sound when reproducing a moving image or music in an application.

The touch screen 213 displays information thereon with a display device composed of, for example, LCD (Liquid Crystal Display) or the like, and while, it detects a position where the user touches (pushes) a screen surface with a finger or the like using a touch sensor in a resistive film method or an electrostatic capacity method. The display control unit 211 processes drawing data issued by the CPU 201 to output, for example, a WEB page, a moving image or the like to the display device of the touch screen 213. The input device interface 212 transmits a user's operation, which has been detected with the touch sensor of the touch screen 213, to the CPU 201 as predetermined signals.

When a card in which the noncontact IC chip is embedded is held over a predetermined position of the content registration terminal 20, the noncontact IC card reader/writer 214 reads the data stored in the IC chip or writes predetermined data to the IC chip in accordance with a command of the CPU 201.

The sensor 215 is a sensor other than the touch sensor of the touch screen 213, which comprises a motion sensor, a light sensor, a proximity sensor or the like.

The auxiliary storage device 216 is composed of, for example, a semiconductor memory called a flash memory or a hard disk. The auxiliary storage device 216 stores a program for realizing each function to be executed in the CPU 201, and also stores various data.

The external recording medium interface 217 accesses an external recording medium 220 to read data stored therein. The external recording medium 220 is, for example, a portable flash memory. A program to be executed in the CPU 201 to realize each function according to the First Embodiment of the present invention is provided to the content registration terminal 20 via the external recording medium interface 217 or, as described above, the mobile phone network and the network through the wireless signal processing unit 206 and the wireless communication antenna 207.

FIG. 5 shows a configuration in the case where a smartphone is used as the content registration terminal 20. However, for example, when a mobile phone or the like is used as the content registration terminal 20 and it is not provided with the touch screen, a display device composed of LCD or the like is connected to the display control unit 211, and a button or the like is connected to the input device interface 212.

When a general PC is used as the content registration terminal 20, a network interface for connection to an external network is added, a display device in a built-in type or a separate casing type is connected to the display control unit 211, and a keyboard and a mouse are connected to the input device interface 212. Further, a camera and a scanner for reading the code 11 of the card 10 are connected.

It should be noted that the content viewing terminal 30 may also be a smartphone similar to the configuration shown in FIG. 5.

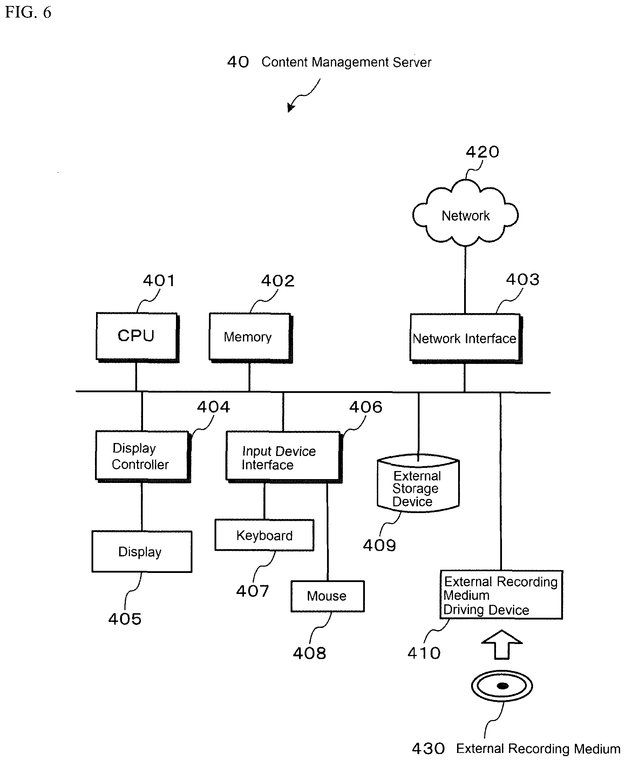

Next, an example of a hardware configuration of the content management server 40 is described with reference to FIG. 6. However, the content management server 40 of FIG. 6 merely exemplifies a representative configuration of a general server computer. Various other computers may be used as the content management server 40.

The content management server 40 includes a CPU 401, a memory 402, a network interface 403, a display controller 404, a display 405, an input device interface 406, a keyboard 407, a mouse 408, an external storage device 409, and an external recording medium driving device 410.

The CPU 401 controls operation of each component of the content registration terminal 20 of the content management server 40 and executes each function under control of OS.

The memory 402 is usually composed of a ROM (Read Only Memory) which is a nonvolatile memory and a RAM (Random Access Memory) which is a volatile memory. A program or the like to be executed when the content management server 40 is activated is stored in the ROM. Programs to be executed in the CPU 401 and data or the like to be used during execution of these programs is temporarily stored in the RAM.

The network interface 403 is an interface for connection to a network 420. The network 420 is, for example, a network including a wireless communication network or the Internet.

The display controller 404 is an exclusive controller for actually processing drawing commands issued by the CPU 401. The drawing data processed by the display controller 404 is temporarily written in a graphic memory and thereafter outputted to the display 405. The display 405 is, for example, a display device configured with LCD (Liquid Crystal Display).

The input device interface 406 receives signals input from the keyboard 407 or the mouse 408 and transmits a predetermined command to the CPU 401 in accordance with signal pattern thereof.

The external storage device 409 is, for example, a storage device such as a hard disk drive (HDD), and the program and data as described above are stored in this device to be loaded into the RAM of the memory 402 from there at the time of execution.

The external recording medium driving device 410 is a device that accesses a recording surface of a portable external recording medium 430 such as a CD (Compact Disc), a DVD (Digital Versatile Disc) or the like to read data as recorded therein. In the external recording medium 430, it is also possible to record a program for realizing the content management method according to the First Embodiment of the present invention. The data as recorded in the external recording medium 430 is stored in the external storage device 409 via the external recording medium driving device 410, and if it is a program, it is loaded into the RAM of the memory 402 at the time of execution.

Note that, in the content management server 40, when it is not necessary to operate it by an administrator or the like or when it is operated through remote connection, the display controller 404, the display 405, the input device interface 406, the keyboard 407 and the mouse 408 become unnecessary.

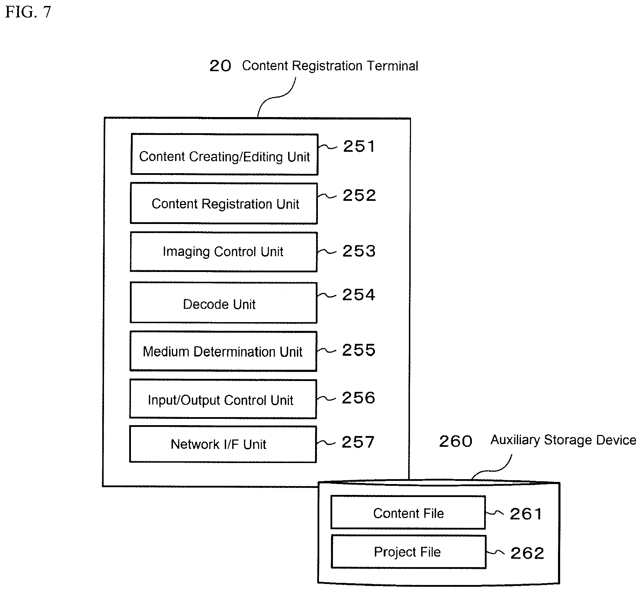

Next, with reference to a functional block diagram of FIG. 7, an outline of functions of the content registration terminal 20 according to the First Embodiment of the present invention is described. As shown in FIG. 7, the content registration terminal 20 includes a content creating/editing unit 251, a content registration unit 252, an imaging control unit 253, a decode unit 254, a medium determination unit 255, an input/output control unit 256, and a network I/F unit 257. In an auxiliary storage device 260 of the content registration terminal 20, a content file 261 and a project file 262 are stored.

The content creating/editing unit 251 creates and/or edits the content 5 based on a user's operation of the content registration terminal 20. It is possible to obtain an image (moving image, still image, etc.) constituting a part of the content 5 by the imaging control unit 253, which is described later, or to read and use an existing image therefor.

The content registration unit 252 transmits the content 5 completed by the content creating/editing unit 251 to the content management server 40 and the first data 6 read from the code 11 of the card 10 to the content management server 40 in accordance with the content registration instruction of the user of the content registration terminal 20, thereby the card 10 and the content 5 are associated.

The content file 261 stored in the auxiliary storage device 260 of the content registration terminal 20 stores the data of the content 5, and the project file 262 stores setting data or the like related to creating and/or editing of the content 5. When the content 5 is registered in the content management server 40, these files are transmitted to the content management server 40 and are stored as a content file 464 and a project file 465, respectively, which are described later (note that the content file 261 and the project file 262 may be configured to be stored in the content registration terminal 20 during a predetermined period for edition or the like).

When the user (content provider), for example, collectively and continuously reads the codes 11 of the cards 10, the content registration unit 252 transmits the first data 6 obtained from the plurality of codes 11 read in this manner and the content 5 to the content management server 40, thereby a plurality of cards 10 and the content 5 are associated.

The imaging control unit 253 controls the in-camera 203a and the out-camera 203b of the content registration terminal 20 shown in FIG. 5 based on a user's operation of the content registration terminal 20 to read the code 11 of the card 10. Also, the imaging control unit 253 shoots an image to be used to create the content 5 and provides it to the content creating/editing unit 251.

The decode unit 254 receives the image of the code 11 (of the card 10) shot by the in-camera 203a or the out-camera 203b of the content registration terminal 20 under the imaging control unit 253 to extract a text string from the image of the code 11 using a predetermined general decode logic. In this example, the code 11 is a QR code (registered trademark), and a text string including a URL is extracted using the decode logic from data before a terminal identification code appears.

The medium determination unit 255 transmits the URL, which is the text string extracted by the decode unit 254, as the first data 6 to the content management server 40 to determine whether the card 10 read as above is normal or not in accordance with response from the content management server 40.

The input/output control unit 256 transmits to the CPU 201 a user's operation-related signals to be obtained through the touch screen 213 and the input device interface 212 of the content registration terminal 20 as shown in FIG. 5. And also, the input/output control unit 256 performs control to, based on a command of the CPU 201, display screens related to creating/editing of the content 5, screens related to registration of the content 5, images shot or the like on the touch screen 213 via the display control unit 211.

The network I/F unit 257 controls the wireless signal processing unit 206 or the like of the content registration terminal 20 as shown in FIG. 5 to realize data transmission/reception with the content management server 40.

Although the above-described functions of the content creating/editing unit 251 to the network I/F unit 257 are in principle realized by an exclusive application installed in the content registration terminal 20, at least a part of these functions may also be realized by a universal application such as a WEB browser.

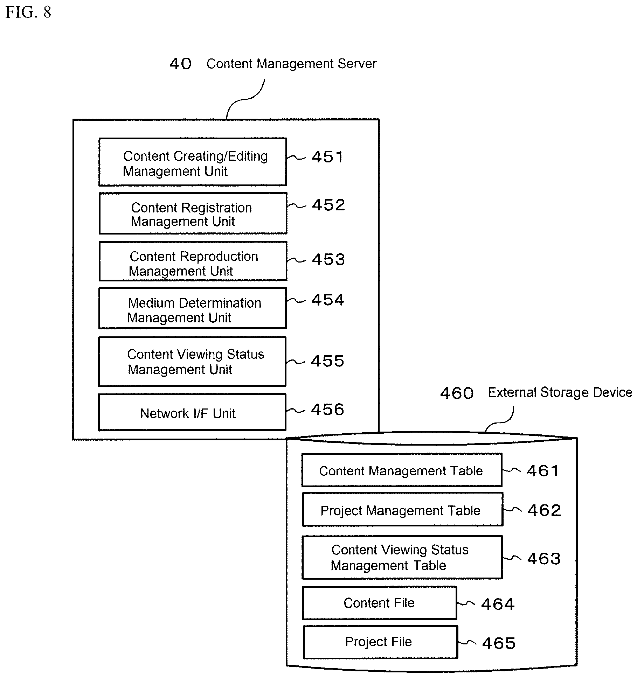

Next, with reference to a functional block diagram of FIG. 8, an outline of functions of the content management server 40 according to the First Embodiment of the present invention is described. As shown in FIG. 8, the content management server 40 includes a content creating/editing management unit 451, a content registration management unit 452, a content reproduction management unit 453, a medium determination management unit 454, a content viewing status management unit 455, a network I/F unit 456. In the external storage device 460, a content management table 461, a project management table 462, a content viewing status management table 463, a content file 464, and a project file 465 are stored.

The content creating/editing management unit 451 performs processing (for example, display instruction of screen, effect processing of image, etc.) to create and/or edit the content corresponding to processing of the content creating/editing unit 251 of the content registration terminal 20 in accordance with a user's operation of the content registration terminal 20.

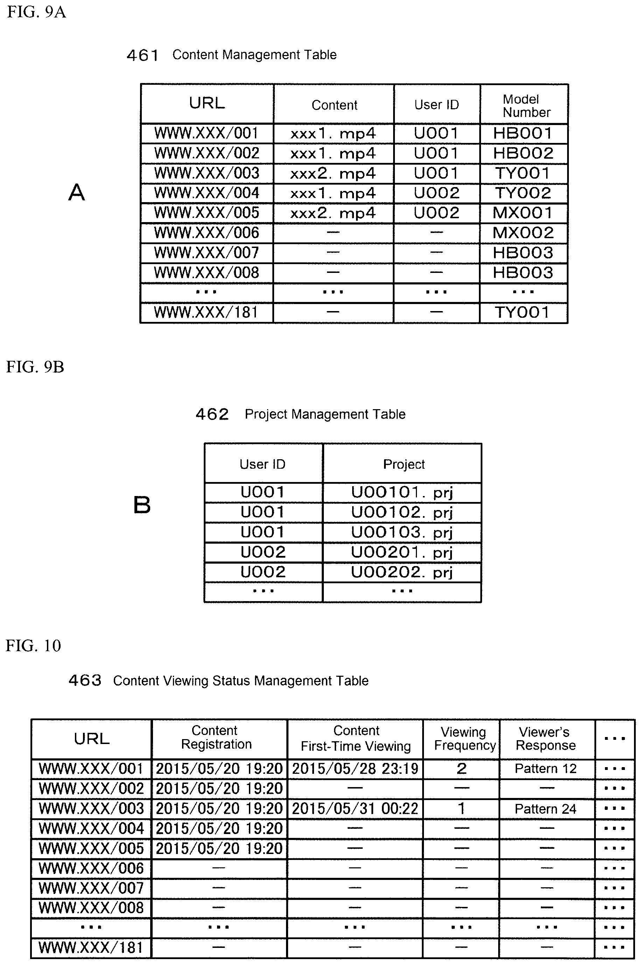

Upon receiving the project file from the content registration terminal 20, the content creating/editing management unit 451 stores it in the project file 465 in association with a user ID (see FIG. 9B) and stores the data of the content 5 generated based on the project file in the content file 464. The content creating/editing management unit 451 may also receive the data of the content 5 from the content registration terminal 20 to store the data of the content 5 in the content file 464 as well.

When receiving the first data 6 and the content 5 from the content registration terminal 20, the content registration management unit 452 stores the URL data included in the first data 6 and a file name of the content 5 in the content management table 461. For example, when receiving the URL ("WWW.XXX/001") and the data of the content 5 ("xxxl.mp4") from the content registration terminal 20, in a record of the same URL of the content management table 461, as shown in FIG. 9A, the file name of the content 5 is stored in a table item of Content and further the user ID is stored in a table item of User so as to associate the URL and the content 5 with each other. Here, in the content management table 461, the URL corresponding to the card 10 is stored in advance.

Also, when the content 5 is registered from the content registration terminal 20, the content registration management unit 452 stores date and time of content registration in association with the URL in the content viewing status management table 463 shown in FIG. 10.

The content reproduction management unit 453 performs processing corresponding to processing of a content reproduction control unit 351, which is described later, of the content viewing terminal 30 in accordance with a user's operation of the content viewing terminal 30. For example, the content reproduction management unit 453 determines a file of the corresponding content 5 from the content management table 461 in accordance with the URL included in the second data 7 as received to perform control to download the content 5 for reproduction or perform streaming reproduction in accordance with the content of the file. Also, the content reproduction management unit 453 performs control to reproduce the content 5 in accordance with a user's operation to start reproduction, stop reproduction or the like.

When the first data 6 is transmitted from the content registration terminal 20, the medium determination management unit 454 determines whether or not the URL included in the first data 6 has been stored in the table item of URL of the content management table 461 to transmit the determination result to the content registration terminal 20. Also, when the URL included in the first data 6 is stored in the table item of URL of the content management table 461, the medium determination management unit 454 determines whether or not the file name of the content has been stored in the table item of Content of the record to transmit the determination result to the content registration terminal 20.

The content viewing status management unit 455 stores information based on viewing status information transmitted from a content viewing status transmission unit 352, which is described later, of the content viewing terminal 30 in the content viewing status management table 463 as shown in FIG. 10. For example, the content viewing status management unit 455 obtains date and time (in a table item of "Content First-Time Viewing") when the content 5 was first viewed and viewing frequency (in a table item of "Viewing Frequency") of the content 5 from a timing of instructing reproduction of the content 5 included in the viewing status information to store those in the content viewing status management table 463. Also, the content viewing status management unit 455 obtains a pattern (in a table item of "Viewer's Response") related to viewer's response from a user's facial expression, state, biometric information or the like included in the viewing status information to store those in the content viewing status management table 463.

In addition, the content viewing status management unit 455 provides the data stored in the content viewing status management table 463 and analysis results of the data to the content registration terminal 20 in accordance with a user's (content provider's) operation of the content registration terminal 20. With such a mechanism, the content provider can grasp how many persons (or percentage) viewed the content 5 and/or what was viewing status as a result of encouragement to allow the content 5 to be viewed by the cards 10 distributed by himself/herself. It is possible to grasp the content 5 related to the data stored in the content viewing status management table 463 by the URL. Also, by managing the URL and the user ID of the content provider in association with each other (a corresponding database is not shown), only the data on the viewing status of the content 5 related to the content provider is provided to the content provider.

The network I/F unit 456 controls the network interface 403 or the like of the content management server 40 shown in FIG. 6 to be connected to a network such as the Internet and realize data transmission and reception with the content registration terminal 20 and the content viewing terminal 30.

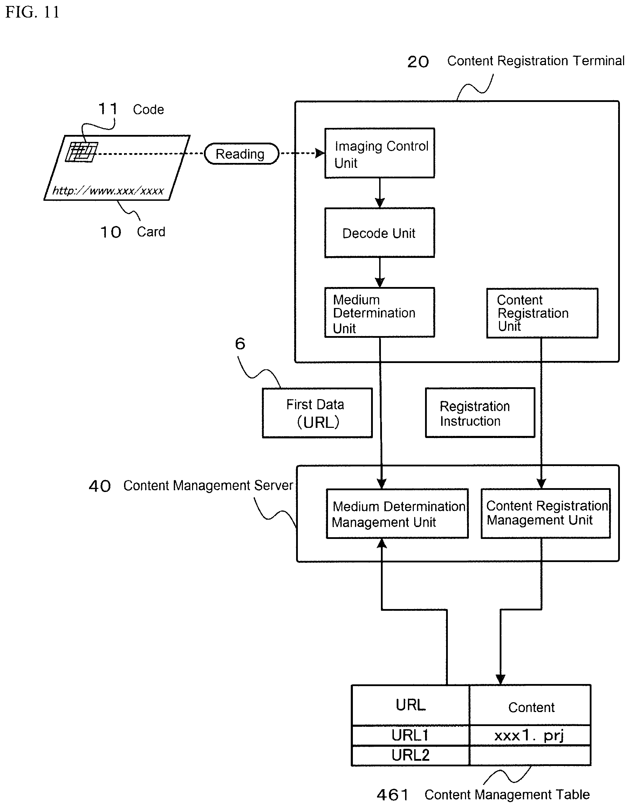

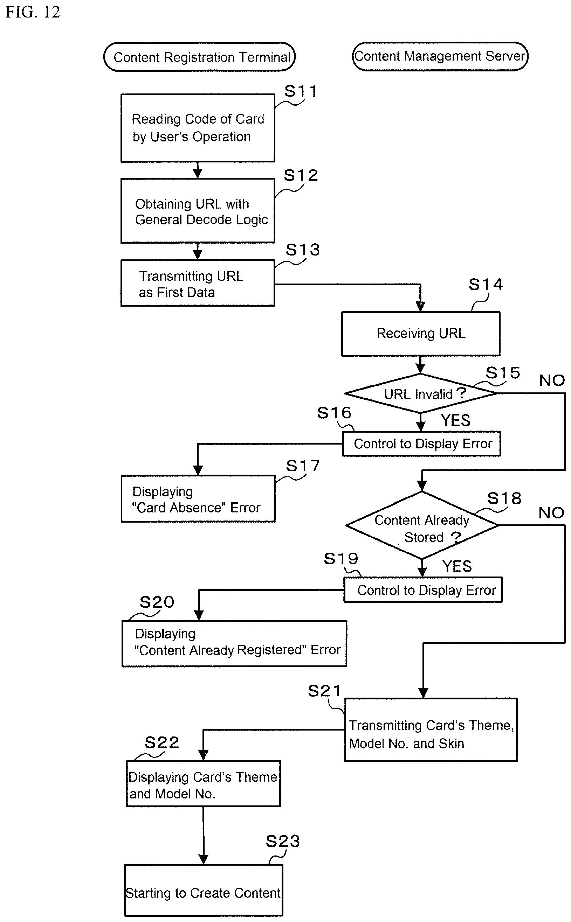

Next, with reference to FIG. 11 and FIG. 12, a content registration processing in the content management system 1 according to the First Embodiment of the present invention is described. FIG. 12 is a flowchart for explaining the procedure of the content registration processing, in which the processing of the content registration terminal 20 and the content management server 40 are represented with the lapse of time, respectively.

The content registration terminal 20 controls the imaging device (the in-camera 203a or the out-camera 203b) of the content registration terminal 20 with the imaging control unit 253 to
read the code 11 of the card 10 (Step S11 in FIG. 12), and the decode unit 254 decodes the data as read with a general decode logic to obtain the first data 6 (Step S12). In this example, the first data 6 is URL, and this URL is also printed on the card 10 for display.

Next, the medium determination unit 255 transmits the first data 6 to the content management server 40 (Step S13).

Upon receiving the first data 6 from the content registration terminal 20 (Step S14), the medium determination management unit 454 of the content management server 40 determines, with reference to the content management table 461, whether or not the URL of the first data 6 has been stored. When the URL is not present in the content management table 461 and thus it is determined that the URL is invalid (YES in Step S15), the medium determination management unit 454 performs control to display an error on the content registration terminal 20 (Step S16), resulting in displaying a "Card Absence" error on the touch screen 213 of the content registration terminal 20 in accordance with this control (Step S17).

When the URL is present in the content management table 461 and thus it is determined that the URL is not invalid (NO in Step S15), the medium determination management unit 454 of the content management server 40 determines whether or not the file name of the content 5 is stored in the table item of Content of the record of the URL. When the content is already stored (YES in Step S18), the medium determination management unit 454 performs control to display an error on the content registration terminal 20 (Step S19), resulting in displaying a "Content Already Registered" error on the touch screen 213 of the content registration terminal 20 in accordance with this control (Step S20).

When the content is not stored and thus it is determined that the content is not registered (NO in Step S18), the medium determination management unit 454 transmits, with reference to the content management table 461, the card type (card's theme and model number in this example) and the skin corresponding thereto to the content registration terminal 20 (Step S21). In the content management table 461, as shown in FIG. 9A, the corresponding model number is stored for each card 10 to be able to grasp the theme from the model number. Here, with reference to a card management table (not shown), it is possible to obtain the theme and the skin from the model number due to correspondence therebetween.

Upon receiving the card type (card's theme and model number) from the content management server 40, the content registration unit 252 of the content registration terminal 20 displays it on the touch screen 213 of the content registration terminal 20 (Step S22).

Here, the content provider can select a skin (content materials such as frames, opening movies, movies for material, background images, etc.) corresponding to the card type and request it to the content management server 40. The content provider downloads such materials as necessary to start to create the content 5 (Step S23). Thereafter, the content registration unit 252 of the content registration terminal 20 transmits the first data 6 and the content 5 to the content management server 40 in accordance with the content registration instruction of the content provider, and then the content registration management unit 452 of the content management server 40 stores the file name of the content 5 (further, the user ID of the content provider) in the table item of Content of the record indicated by the URL of the first data 6.

Here, since the URL individually associated with the card 10 is stored in advance in the content management table 461 and the content (the file name of the content 5) is configured to be stored in the table item of Content when the content 5 is registered by the content provider, as described above, it becomes possible to perform a presence check of the card 10 and a registration check of the content 5 regarding the card 10 with which the content provider intends to associate the content 5.

Next, an outline of the content management system according to a Second Embodiment of the present invention is described with reference to FIG. 13. The content management system 2 shown in FIG. 13 may be considered as a modification of the above-described content management system 1. In the content management system 2, the content 5 and a card 10' are associated with each other by the content registration terminal 20'. The card 10' is similar to the card 10 used in the above-described content management system 1, but in place of the code 11, a code 12 which is described later is printed for display.

Since the content management system 2 has some points in common with the content management system 1, different points are described. As shown in FIG. 13, the content management system 2 is configured to include a content registration terminal 20', a content management server 40', and a decode server 60.

The content registration terminal 20' is a smartphone similar to the content registration terminal 20, which reads the card 10', obtains the first data 6', and transmits it to the content management server 40'.

The content viewing terminal 30 is the same as that of the content management system 1, but in this example the card to be read is changed from the card 10 to the card 10'. However, the content of the second data 7 obtained as a result of reading the card 10' is the same as that in the content management system 1.

Upon receiving the first data 6' from the content registration terminal 20', the content management server 40' transmits encoded data included in the first data 6' to the decode server 60 and receives decoded data to be obtained as a result of decoding from the decode server 60. Note that the decode server 60 and the content management server 40' are connected via, for example, a network including a wireless communication network or the Internet.

With such a mechanism of the content management system 2, as well as the content management system 1, it is possible to easily associate the card 10' and the content 5 with each other. In addition, with such a configuration, it is possible to incorporate confidential data, which cannot be obtained only using a general decode logic, in the card 10' to effectively prevent the card 10' from being falsified.

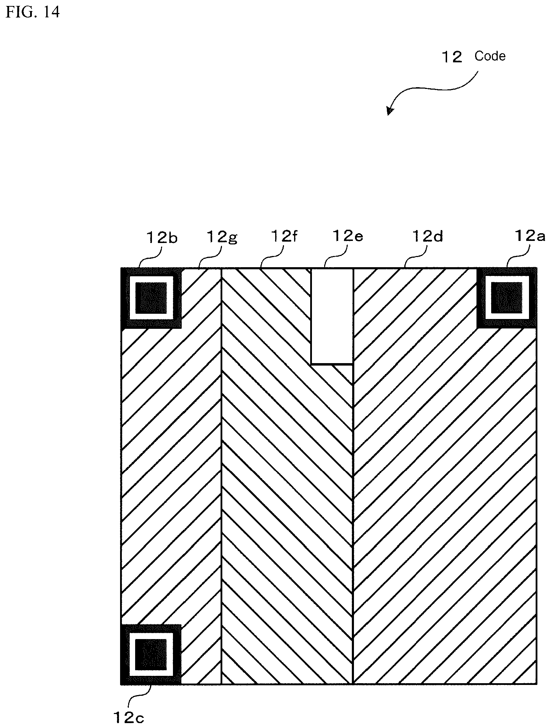

To do so, the code 12 in a configuration different from the code 11 of the card 10 used in the content management system 1 is used in the content management system 2. In FIG. 14, an outline of the code 12 of the card 10' is exemplified. The code 12 is composed of position identification patterns (12a to 12c), a disclosed data area 12d, a terminal identification code area 12e, a confidential data area 12f, a filler area 12g or the like.

In a general decode logic, a text string or the like is extracted from a figure included in the disclosed data area 12d located before the terminal identification code area 12e, and on the other hand, a figure included in the confidential data area 12f located after the terminal identification code area 12e is not evaluated. However, using a special decode logic, the figure included in the confidential data area 12f is also evaluated and a bit string or the like is extracted from the confidential data area 12f.

In this example, as shown in FIG. 14, the code 12 having a specification in which the disclosed data and the confidential data are distinguished depending on area is used. However, the content management system according to the Second Embodiment of the present invention is not limited to such a code. Any code may be used as long as the disclosed data such as a URL and the confidential data such as encoded data are configured to be included in the first data 6' read by the content registration terminal 20'.

In the content management system 2, the content registration terminal 20' also read the content of the confidential data area 12f using the above-described special decode logic (for example, a logic which is not concretely disclosed or which is not permitted without licensing) to transmit the first data 6' including this together with the URL extracted from the disclosed data area 12d to the content management server 40'.

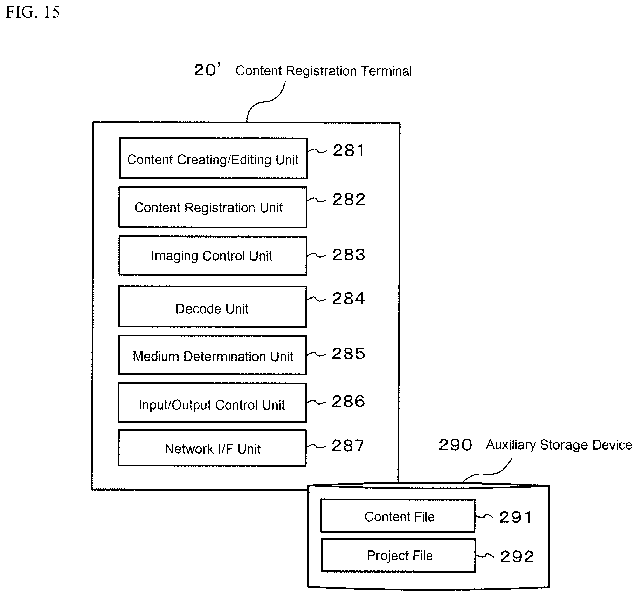

Next, with reference to a functional block diagram of FIG. 15, an outline of functions of the content registration terminal 20' according to the Second Embodiment of the present invention is described. As shown in FIG. 15, the content registration terminal 20' includes a content creating/editing unit 281, a content registration unit 282, an imaging control unit 283, a decode unit 284, a medium determination unit 285, an input/output control unit 286, a network I/F unit 287. In an auxiliary storage device 290 of the content registration terminal 20', a content file 291 and a project file 292 are stored.

The content creating/editing unit 281, the content registration unit 282, the imaging control unit 283, the input/output control unit 286 and the network I/F unit 287 are configured as well as the content creating/editing unit 251, the content registration unit 252, the imaging control unit 253, the input/output control unit 256 and the network I/F unit 257, respectively, of the content registration terminal 20 according to the First Embodiment of the present invention, so the details thereof are omitted.

The decode unit 284 receives the image of the code 12 (of the card 10') shot by the imaging device of the content registration terminal 20' (corresponding to the in-camera 203a or the out-camera 203b of the content registration terminal 20) under the imaging control unit 283 to extract data from the disclosure data area 12d and the confidential data area 12f of the image of the code 12 using a special decode logic. In this example, the code 12 is a special QR code (registered trademark), a text string including a URL is extracted from the disclosed data area 12d and a bit string (encoded data) is extracted from the confidential data area 12f using the above decode logic.

The medium determination unit 285 transmits the URL and the encoded data extracted by the decode unit 284 as the first data 6' to the content management server 40' to determine whether the card 10' read as above is normal or not in accordance with response from the content management server 40'.

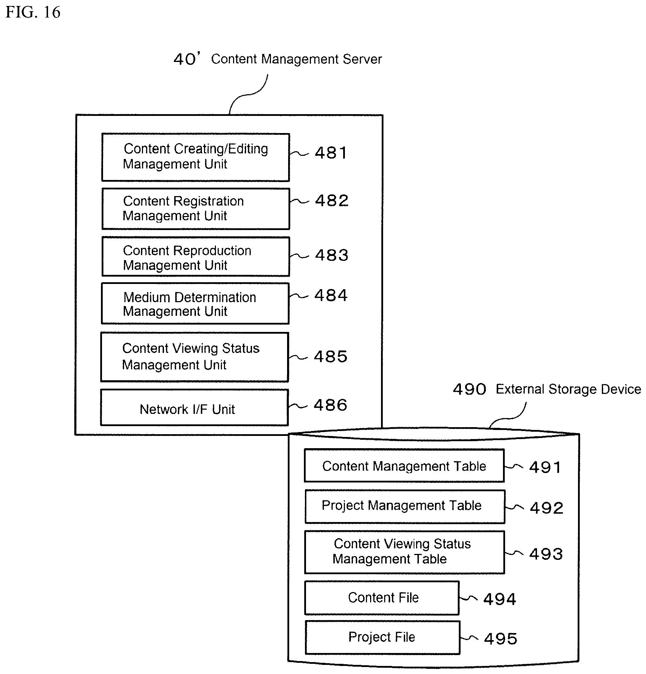

Next, with reference to a functional block diagram of FIG. 16, an outline of functions of the content management server 40' according to the Second Embodiment of the present invention is described. As shown in FIG. 16, the content management server 40' includes a content creating/editing management unit 481, a content registration management unit 482, a content reproduction management unit 483, a medium determination management unit 484, a content viewing status management unit 485, and a network I/F unit 486. In the external storage device 490, a content management table 491, a project management table 492, a content viewing status management table 493, a content file 494, and a project file 495 are stored.

The content creating/editing management unit 481, the content registration management unit 482, the content reproduction management unit 483, the content viewing status management unit 485, and the network I/F unit 486 are configured as well as the content creating/editing management unit 451, the content registration management unit 452, the content reproduction management unit 453, the content viewing status management unit 455, and the network I/F unit 456, respectively, of the content management server 40 according to the First Embodiment of the present invention, so the details thereof are omitted.

When the first data 6' (URL and encoded data) is transmitted from the content registration terminal 20', the medium determination management unit 484 requests the decode server 60, which is described later, to decode the encoded data and then receives the confidential data decoded from the decode server 60.

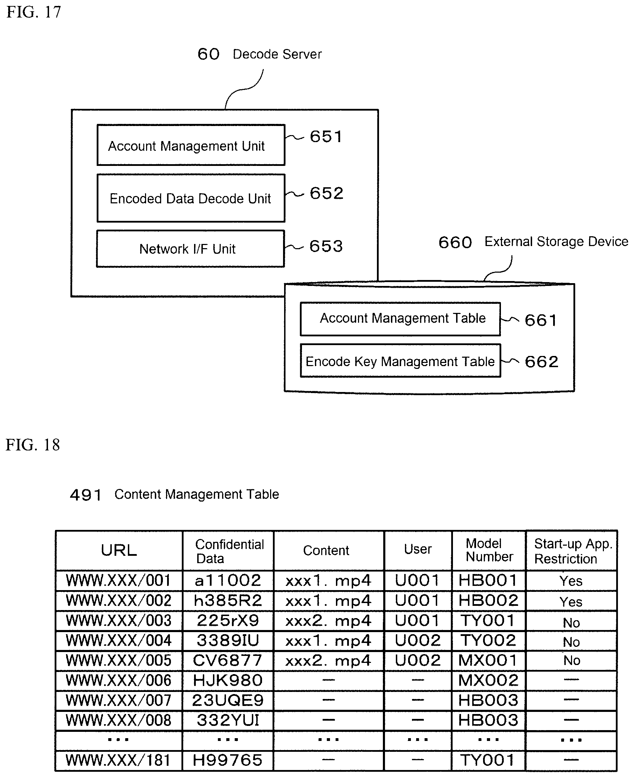

Next, the medium determination management unit 484 determines whether or not a pair of the URL included in the first data 6' and the confidential data received from the decode server 60 matches the pair of the URL and the confidential data stored in the content management table 491 (see FIG. 18) to transmit the determination result to the content registration terminal 20'. Also, when the pair of the URL and the confidential data is present in the content management table 491, the medium determination management unit 484 determines whether or not the file name of the content 5 has been stored in the table item of Content of the record to transmit the determination result to the content registration terminal 20'.

Next, with reference to a functional block diagram of FIG. 17, an outline of functions of the decode server 60 according to the Second Embodiment of the present invention is described. As shown in FIG. 17, the decode server 60 includes an account management unit 651, an encoded data decode unit 652, and a network I/F unit 653. In the external storage device 660, an account management table 661 and an encode key management table 662 are stored. The hardware configuration of the decode server 60 may be the same as that of the content management server 40 shown in FIG. 6.

The account management unit 651 manages an account for permitting (user authentication) access from the content management server 40' by an account management table 661 (not shown in detail). When the encoded data from the content management server 40' is transmitted together with an account ID (application ID) of the permitted account, the account management unit 651 allows the encoded data as received to proceed to be decoded, otherwise it refuses to do so. The account, for example, should be set and acquired by an administrator of the content management server 40' in advance by a contract or the like.

When receiving the encoded data from the content management server 40', the encoded data decode unit 652 performs decode processing to transmit the confidential data obtained as a result of decoding the encoded data to the content management server 40'. In addition, the encoded data decode unit 652 performs decode processing when the user authentication is permitted by the account management unit 651 as described above.

Decode processing is performed using, for example, an encode key managed by an encode key management table 662 (not shown in detail), and the encode key is set for each account or for each serial ID set in the account. Also, the encode key may be configured to be provided every time by the content management server 40'. It may be also possible to configure to be decoded using a confidential decode logic without using the encode key.

The network I/F unit 657 controls a network interface (corresponding to the network interface 403 of the content management server 40 shown in FIG. 6) or the like to be connected to a network such as the Internet and realize data transmission and reception with the content management server 40'.

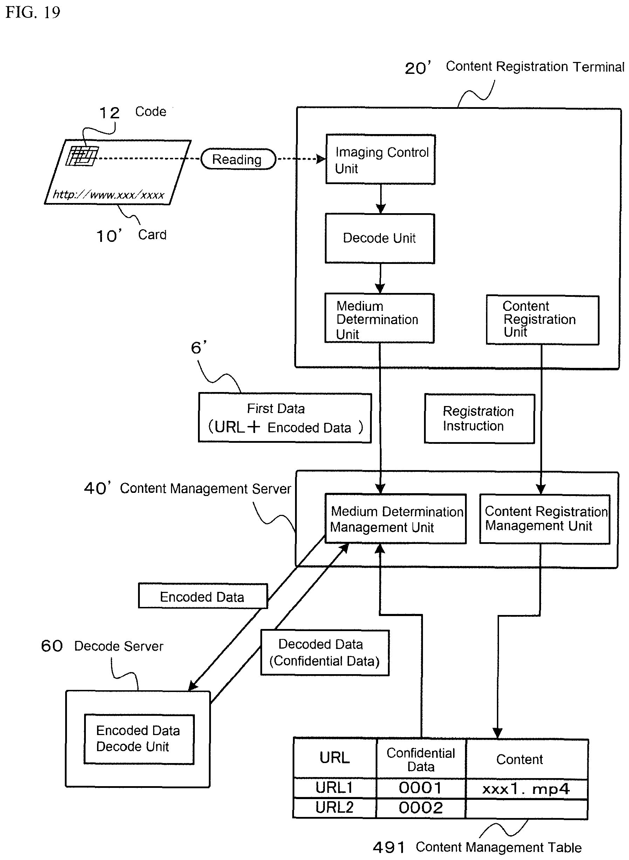

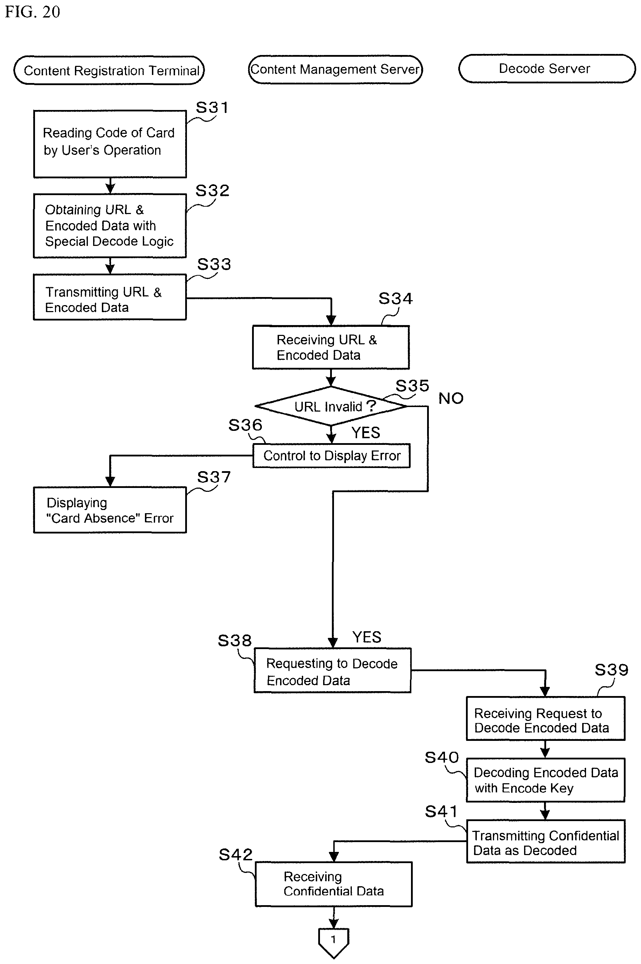

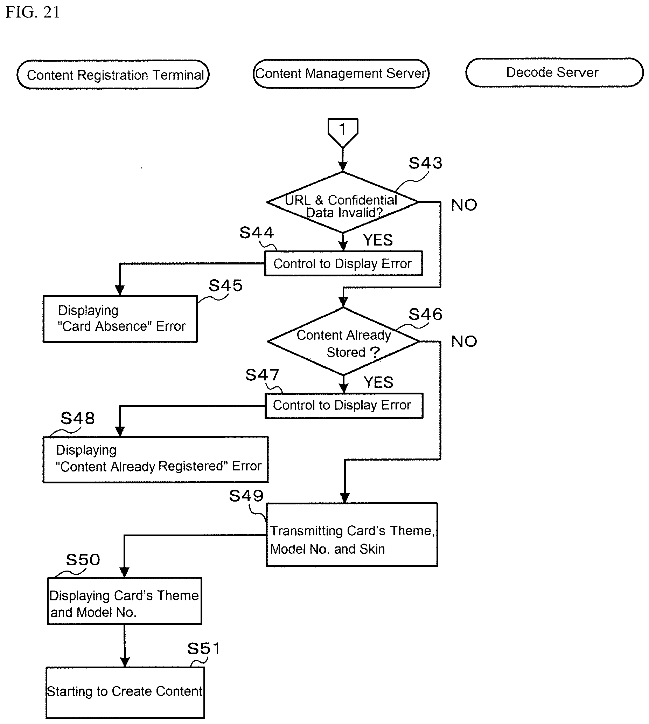

Next, with reference to FIG. 19 to FIG. 21, a content registration processing in the content management system 2 according to the Second Embodiment of the present invention is described. FIG. 20 and FIG. 21 are flowcharts for explaining the procedure of the content registration processing, in which the processing of the content registration terminal 20', the content management server 40' and the decode server 60 are represented with the lapse of time, respectively.

The content registration terminal 20' controls the imaging device (corresponding to the in-camera 203a and the out-camera 203b of the content registration terminal 20) of the content registration terminal 20' under the imaging control unit 283 to read the code 12 of the card 10' (Step S31 in FIG. 20), and the decode unit 284 decodes the data as read with a special decode logic to obtain the first data 6' (Step S32). In this example, the first data 6' is URL and encoded data, and this URL is also displayed on the card 10' by printing.

Next, the medium determination unit 285 transmits the first data 6' to the content management server 40' (Step S33).

Upon receiving the first data 6' from the content registration terminal 20' (Step S34), the medium determination management unit 484 of the content management server 40' determines, with reference to the content management table 491 as shown in FIG. 18, whether or not the URL of the first data 6' has been stored. When the URL is not present in the content management table 491 and thus it is determined that the URL is invalid (YES in Step S35), the medium determination management unit 484 performs control to display an error on the content registration terminal 20' (Step S36), resulting in displaying a "Card Absence" error on the touch screen of the content registration terminal 20' (corresponding to the touch screen 213 of the content registration terminal 20) in accordance with this control (Step S37).

When the URL is present in the content management table 491 and thus it is determined that the URL is not invalid (NO in Step S35), the medium determination management unit 484 of the content management server 40' requests the decode server 60 to perform decode processing of the encoded data (Step S38). At this time, both of the encoded data to be decoded and the account ID (application ID) identifying the account are transmitted from the content management server 40' to the decode server 60 (the serial ID is also transmitted as necessary).

Upon receiving a request for decode processing from the content management server 40' (Step S39), the encoded data decodting unit 652 of the decode server 60 performs decode processing of the encoded data using the encode key corresponding to the account of the content management server 40' (Step S40) and transmits the confidential data obtained by decode processing to the content management server 40' (Step S41).

Upon receiving the confidential data from the decode server 60 (Step S42), the medium determination management unit 484 of the content management server 40' determines, with reference to the content management table 491 as shown in FIG. 18, whether or not the pair of the URL of the first data 6' and the confidential data has been stored (Step S43 in FIG. 21). When the pair of the URL and the confidential data is not present in the content management table 491 and thus it is determined that the URL and confidential data are invalid (YES in Step S43), the medium determination management unit 484 performs control to display an error on the content registration terminal 20' (Step S44), resulting in displaying a "Card Absence" error on the touch screen of the content registration terminal 20' (corresponding to the touch screen 213 of the content registration terminal 20) in accordance with this control (Step S45).

When the pair of the URL and the confidential data is present in the content management table 491 and thus it is determined that the URL and the confidential data are not invalid (NO in Step S43), it is determined whether or not the file name is stored in the table item of Content of the record corresponding to the pair of the URL and the confidential data. When the content is already stored (YES in Step S46), the medium determination management unit 484 performs control to display an error on the content registration terminal 20' (Step S47), resulting in displaying a "Content Already Registered" error on the touch screen of the content registration terminal 20' (corresponding to the touch screen 213 of the content registration terminal 20) in accordance with this control (Step S48).

When the content is not stored and thus it is determined that the content is not registered (NO in Step S46), the medium determination management unit 484 transmits, with reference to the content management table 491, the card type (card's theme and model number in this example) and the skin corresponding thereto to the content registration terminal 20' (Step S49). In the content management table 491, as shown in FIG. 18, the corresponding model number is stored for each card 10', and with reference to a card management table (not shown), it is possible to obtain the theme and the skin from the model number due to correspondence therebetween.

Upon receiving the card type from the content management server 40', the content registration unit 282 of the content registration terminal 20' displays it on the touch screen of the content registration terminal 20' (corresponding to the touch screen 213 of the content registration terminal 20) (Step S50), the content provider starts to create the content 5 from this point (Step S51). Thereafter, the content registration unit 282 of the content registration terminal 20' transmits the first data 6' and the content 5 to the content management server 40' in accordance with the content registration instruction of the content provider, and then the content registration management unit 482 of the content management server 40' stores the file name of the content 5 (further, the user ID of the content provider) in the table item of Content of the record indicated by the pair of the URL of the first data 6' and the confidential data.

Here, since the URL and the confidential data individually associated with the card 10' are stored in advance in the content management table 491 and the content (the file name of the content 5) is configured to be stored in the table item of Content when the content 5 is registered by the content provider, as described above, it becomes possible to perform a presence check of the card 10' and a registration check of the content 5 regarding the card 10' with which the content provider intends to associate the content 5.

In this example, the decode server 60 manages the encode key corresponding to the account or the serial ID in the account and decodes the encoded data using the encode key, but it is also possible to be configured to manage the encode key in the content management server 40' and transmit the encode key together with the encoded data to the decode server 60 when requesting to perform decode processing the encoded data.

Also, in this example, it is assumed that the decode server 60 is another computer located at a different site from the content management server 40', but it is also possible to adopt another computer located at the same site as the content management server 40' for the decode server 60, alternatively, to substitute the content management server 40' for the function of the decode server 60 (in this case, it becomes not necessary to transmit the account ID or the serial ID).

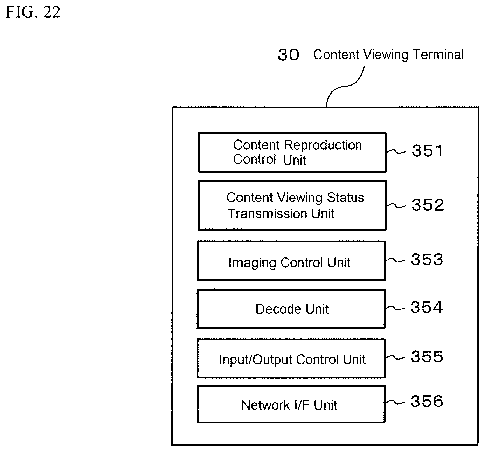

Next, with reference to a functional block diagram of FIG. 22, an outline of the functions of the content viewing terminal 30 used in the content management system 1 according to the First Embodiment of the present invention and in the content management system 2 according to the Second Embodiment of the present invention is described. As shown in FIG. 22, the content viewing terminal 30 includes a content reproduction control unit 351, a content viewing status transmission unit 352, an imaging control unit 353, a decode unit 354, an input/output control unit 355, and a network I/F unit 356.

The content reproduction control unit 351 controls the reproduction of the content 5 based on a user's (content viewer's) operation of the content viewing terminal 30 (for example, it performs control to display the image of the content 5 on the touch screen and to output the sound of the content 5 through the speaker). It is possible to obtain the data of the content 5 from the content management server 40 or the content management server 40' via a wireless signal processing unit or the like to reproduce the content 5 by various methods such as a download format and a streaming format.

Note that, after the user allows the imaging device to read the codes 11, 12 displayed on the cards 10, 10' by printing or the like, the content reproduction control unit 351 converts it into the text data to obtain the URL (by decoding the image of the disclosed data area 12d shown in FIG. 14) and accesses the content management server 40, 40' by the URL to identify the content 5 to be reproduced.

The content viewing status transmission unit 352 grasps the viewing status of the content 5 by the user of the content registering terminal 20 or the content registering terminal 20' to transmit the viewing status information indicating the viewing status of the user via the wireless signal processing unit or the like to the content management servers 40, 40' in a predetermined timing. The viewing status information includes, for example, a timing of instructing reproduction of the content 5, a reproduction time, a number of times of reproduction, a stop position (in case where reproduction is stopped in the middle), a start position (in case where reproduction is started from the middle) or the like. In addition, it is possible to include the user's facial expression, state and biometric information obtained by the imaging device such as the in-camera and the out-camera into the viewing status information, and furthermore, it is possible to include information obtainable by sensors such as the motion sensor, the light sensor, the proximity sensor or the like into the viewing status information.

The imaging control unit 353 controls the imaging device such as the in-camera or the out-camera based on a user's (content viewer's) operation of the content viewing terminal 30 to shoot the code 11, 12 displayed on the cards 10, 10' by printing or the like when reproducing the content 5. Also, the imaging control unit 353 shoots the viewing status during the user is viewing the content 5.

The decode unit 354 receives the image of the code 11, 12 (of the card 10, 10') shot by the in-camera or the out-camera of the content viewing terminal 30 under the imaging control unit 353 to extract the text string from the image of the code 11, 12 by the predetermined general decode logic. In this example, the code 11, 12 is a QR code (registered trademark), and the text string including the URL is extracted using the decode logic from the data before the terminal identification code appears.

Here, as shown in FIG. 14, the data of the code 12 is also embedded behind the terminal identification code area 12e. However, as described above, since the text string is extracted using the general decode logic, the data behind the terminal identification code area 12e is ignored, and the text string including a URL is extracted as well as the code 11.

The input/output control unit 355 and the network I/F unit 356 function as well as those of the content registration terminals 20, 20'.

The content reproduction control unit 351 of the content viewing terminal 30 may be realized, for example, by installing an exclusive application in the content viewing terminal 30 or by reading the code 11, 12 to obtain the URL and then activate the WEB browser to access the URL.

In case where the reproduction control of the content 5 is performed by the exclusive application, it is possible to access the content management server 40 based on the URL obtained as a result of reading the code 11, 12 or to access the content management server 40 in which the network address is designated in advance in accordance with the input of the URL.

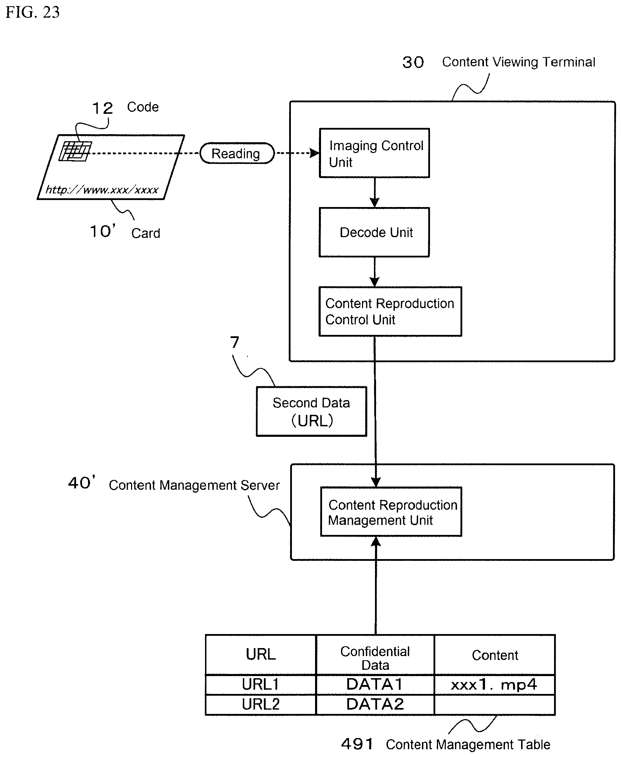

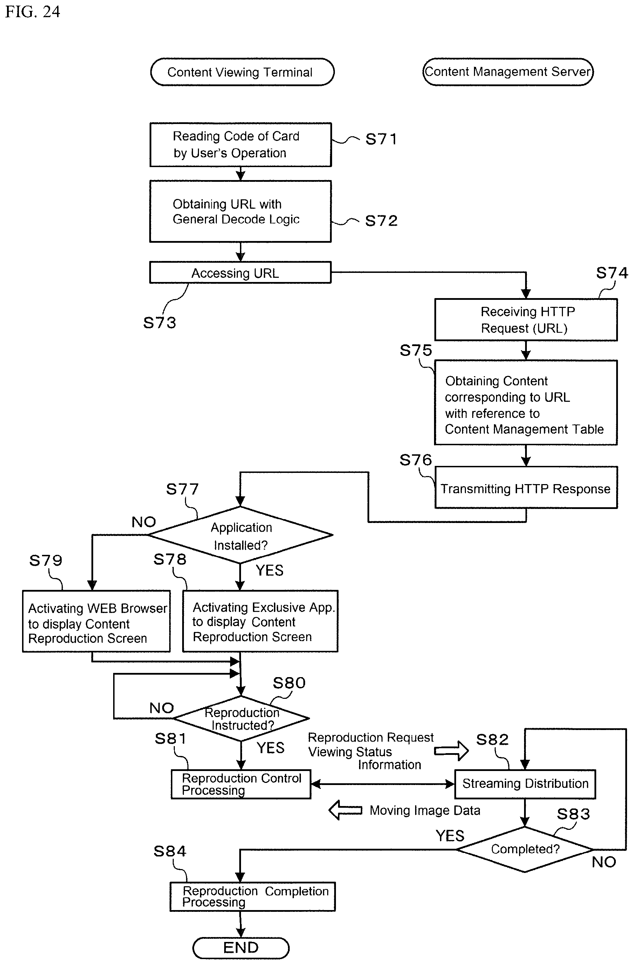

Next, with reference to FIG. 23 and FIG. 24, a content viewing processing in the content management system 1 according to the First Embodiment of the present invention and the content management system 2 according to the Second Embodiment of the present invention is described. FIG. 24 is a flowchart for explaining the procedure of the content viewing processing, in which the processing of the content viewing terminal 30 and the content management server 40' are represented with the lapse of time, respectively. Since the content management server 40 and the content management server 40' have the same function with respect to the content viewing processing, the content management server 40' is described here.

The content viewing terminal 30 controls the imaging device (the in-camera or the out-camera) of the content viewing terminal 30 under the imaging control unit 353 to read the code 12 of the card 10' (Step S71 in FIG. 24), and the decode unit 354 decodes the data as read with the general decode logic to obtain the second data 7 (Step S72). In this example, the second data 7 is URL, and this URL is also displayed on the card 10' by printing. Since the decode unit 354 uses the general decode logic, the data to be obtained is the URL embedded before the terminal identification code even when the code 11 of the card 10 is read in the content management system 1 or the code 12 of the card 10' is read in the content management system 2.

Next, the content reproduction control unit 351 accesses the content management server 40' based on the URL of the second data 7 (Step S73).

In addition, in case where the content viewing terminal 30 performs the content viewing processing with the WEB browser, it is possible to view the content by manually inputting the URL displayed on the card 10' by printing to the WEB browser by the content viewer, who is the user of the content viewing terminal 30, without reading the code 12 of the card 10' with the imaging device.

Upon receiving a HTTP request (URL) from the content viewing terminal 30 (Step S74), the content reproduction management unit 483 of the content management server 40' identifies and obtains, with reference to the content management table 491, a content file corresponding to the second data 7 (URL) (Step S75). Here, when the content file cannot be identified, it is possible to be configured to instruct the content viewing terminal 30 to display an error message or the like thereon, but this processing is omitted from explanation. Further, in this example, the content file is an mp4 file, a WEB page enabling an instruction to reproduce the mp4 file as obtained is generated, and then an HTTP response including such WEB page is transmitted to the content viewing terminal 30 (Step S76).

The content reproduction control unit 351 of the content viewing terminal 30 determines, in accordance with the HTTP response received from the content management server 40', whether or not an exclusive application capable of processing the response has been installed to the content viewing terminal 30 (Step S77). When the exclusive application is installed (YES in Step S77), the exclusive application is activated and a content reproduction screen (not shown) is displayed on the touch screen of the content view terminal 30 (Step S78).

When the exclusive application is not installed (NO in Step S77), a standard WEB browser is activated and a content reproduction screen (not shown) is displayed on the touch screen of the content viewing terminal 30 (Step S79).

Next, in Step S80, it is determined whether or not a reproduction has been instructed by the user of the content viewing terminal 30 (for example, a play icon is touched on a content reproduction screen displayed on the touch screen). A determination processing of Step S80 is repeated when a reproduction is not instructed (NO in Step S80), and the processing proceeds to Step S81 in which a reproduction control processing for reproducing the content file identified with the content management server 40' is performed when a reproduction is instructed (YES in Step S80). On the other hand, in the content reproduction management unit 483 of the content management server 40', a streaming distribution processing is started in Step S82, and a part of the data of the content file is transmitted to the content viewing terminal 30 at a predetermined timing.

At this time, a request for reproduction of the content 5 and the viewing status information indicating the operation content and the viewing status of the user (content viewer) based on the detection results by the imaging device, the sensors or the like are transmitted from the content viewing terminal 30 to the content management server 40' at a predetermined timing. Meanwhile, moving image data of streaming is transmitted from the content management server 40' to the content viewing terminal 30 in response to the request for reproduction from the content viewing terminal 30.

In the content management server 40', it is determined whether or not the remaining data of the content file during reproduction is finished, that is, whether or not the reproduction of the content 5 has been completed (Step S83). When the reproduction of the content 5 has not been completed (No in Step S83), a streaming distribution processing of Step S82 is repeated. On the other hand, when the reproduction of the content 5 has been completed (YES in Step S83), the content viewing terminal 30 is notified of that effect and the content viewing terminal 30 performs, in Step S84, a reproduction completion processing, for example, of displaying a reproduction completion message or mark on the content reproduction screen.

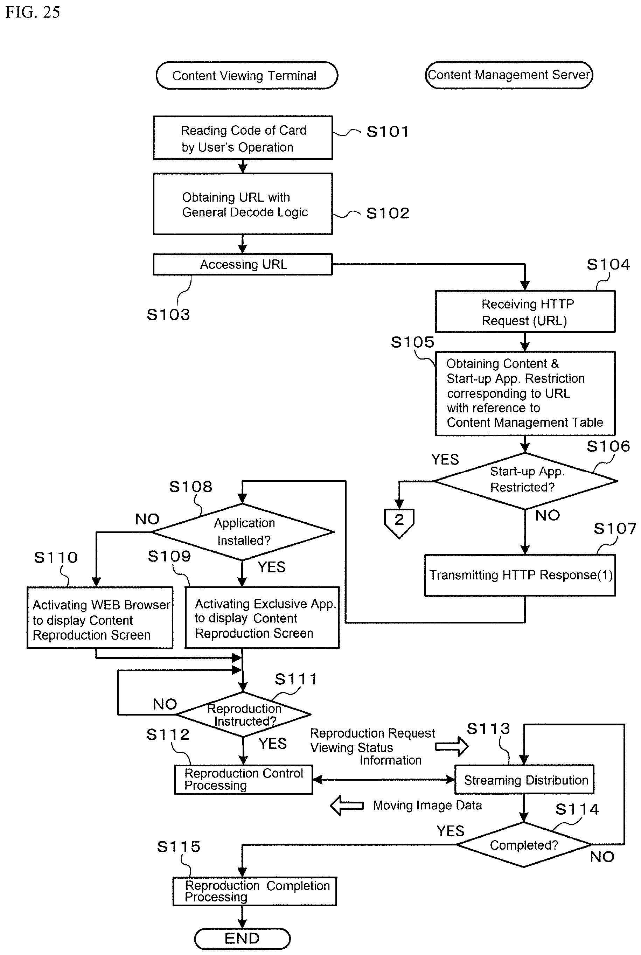

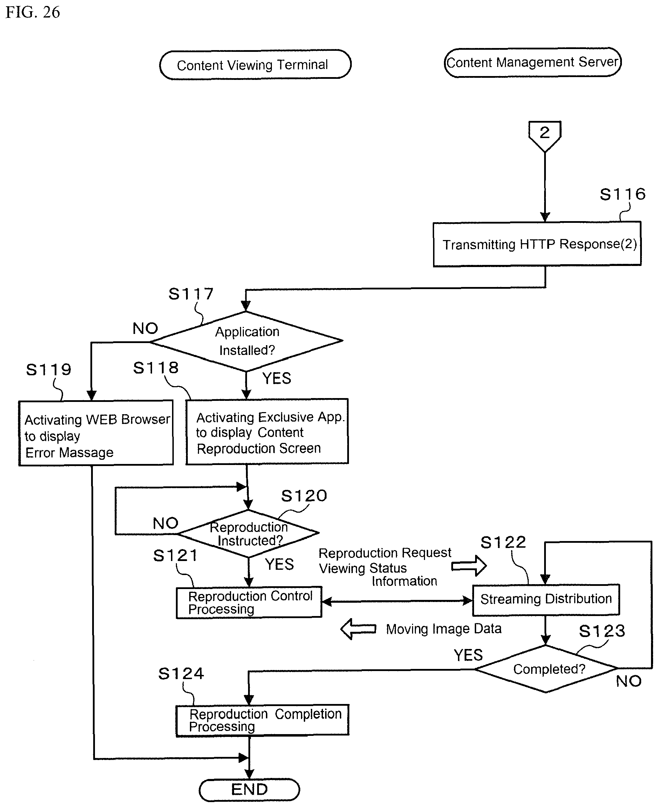

Next, with reference to FIG. 25 and FIG. 26, other content viewing processing different from the content viewing processing shown in FIG. 24 is described. In this content viewing processing, in accordance with a start-up application restriction (see the content management table 491 of FIG. 18) set by the user (content provider) of the content registration terminal 20', an application to be activated to view the content in the content viewing terminal 30 is restricted.

FIG. 25 and FIG. 26 are flowcharts for explaining the procedure of the above-described content viewing processing, in which the processing of the content viewing terminal 30 and the content management server 40' are represented with the lapse of time, respectively. Since the content management server 40 and the content management server 40' have the same function with respect to the content viewing processing, the content management server 40' is described here.

The content viewing terminal 30 controls the imaging device (the in-camera or the out-camera) of the content viewing terminal 30 under the imaging control unit 353 to read the code 12 of the card 10' (Step SI01), the decode unit 354 decodes the data as read with the general decode logic to obtain the second data 7 (Step S 102). In this example, the second data 7 is URL, and this URL is also displayed on the card 10' by printing. Since the decode unit 354 uses the general decode logic, the data to be obtained is the URL embedded before the terminal identification code even when the code 11 of the card 10 is read in the content management system 1 or the code 12 of the card 10' is read in the content management system 2.

Next, the content reproduction control unit 351 accesses the content management server 40' based on the URL of the second data 7 (Step S103).

Upon receiving a HTTP request (URL) from the content viewing terminal 30 (Step S104), the content reproduction management unit 483 of the content management server 40' identifies and obtains, with reference to the content management table 491, a content file corresponding to the second data 7 (URL) and further obtains presence or absence of restriction of a start-up application (Step S105). Here, when the content file cannot be identified, it is to possible to be configured to instruct the content viewing terminal 30 to display an error message or the like, but this processing is omitted from explanation.

Next, the content reproduction management unit 483 of the content management server 40' determines the presence or absence of restriction of the start-up application (Step S106). When restriction of the start-up application is absent (NO in Step S106), a WEB page enabling an instruction to reproduce the content file (mp4 file) as obtained is generated, and an HTTP response (1) including the WEB page is transmitted to the content viewing terminal 30 (Step S107).

The content reproduction control unit 351 of the content viewing terminal 30 activates, in accordance with the HTTP response (1) as received from the content management server 40', either an exclusive application or a WEB browser to reproduce the content. In this example, the content reproduction is in principle performed using the exclusive application, and meanwhile, when the exclusive application is not installed, a WEB browser is used. Note that a user ID and a password are necessary to activate the exclusive application, and such information has been set by the user (content viewer) of the content viewing terminal 30 at the first user registration or the like. Thereafter, the processing from Step S108 to Step S115 is the same as the processing from Step S77 to Step S84 shown in FIG. 24.

As a result of determining the presence or absence of restriction of the start-up application (Step S106), when restriction of the start-up application is present (YES in Step S106), a WEB page enabling an instruction to reproduce the content file (mp4 file) as obtained is generated, an HTTP response (2) including the WEB page is transmitted to the content viewing terminal 30 (Step S116 in FIG. 26).

The content reproduction control unit 351 of the content viewing terminal 30 determines, in accordance with the HTTP response (2) as received from the content management server 40', whether or not an exclusive application capable of processing the response has been installed to the content viewing terminal 30 (Step S117). When the exclusive application has been installed (YES in Step S117), the exclusive application is activated and a content reproduction screen (not shown) is displayed on the touch screen of the content viewing terminal 30 (Step S118).

When the exclusive application is not installed (NO in Step S117), since the content cannot be reproduced in this situation, a standard WEB browser is activated and a predetermined error message is displayed on the touch screen of the content viewing terminal 30 (Step S119).

After Step S118, in Step S120, it is determined whether or not a reproduction has been instructed by the user of the content viewing terminal 30 (for example, a play icon is touched on a content reproduction screen displayed on the touch screen). A determination processing of Step S120 is repeated when a reproduction is not instructed (NO in Step S 120), and the processing proceeds to Step S121 in which a reproduction control processing for reproducing the content file identified with the content management server 40' is performed when a reproduction is instructed (YES in Step S120). On the other hand, in the content reproduction management unit 483 of the content management server 40', a streaming distribution processing is started in Step S122, and a part of the data of the content file is transmitted to the content viewing terminal 30 at a predetermined timing.

At this time, a request for reproduction of the content 5 and the viewing status information indicating the operation content and the viewing status of the user (content viewer) based on the detection results by the imaging device, the sensors or the like are transmitted from the content viewing terminal 30 to the content management server 40' at a predetermined timing. Meanwhile, moving image data of streaming is transmitted from the content management server 40' to the content viewing terminal 30 in response to the request for reproduction from the content viewing terminal 30.

In the content management server 40', it is determined whether or not the remaining data of the content file during reproduction is finished, that is, whether or not the reproduction of the content 5 has been completed (Step S123). When the reproduction of the content 5 has not been completed (NO in Step S123), a streaming distribution processing of Step S122 is repeated. On the other hand, when the reproduction of the content 5 is completed (YES in Step S123), the content viewing terminal 30 is notified of that effect and the content viewing terminal 30 performs, in Step S124, a reproduction completion processing, for example, of displaying a reproduction completion message or mark on the content reproduction screen.

In the content viewing processing shown in FIGS. 25 and 26, it is controlled to perform the reproduction of the content 5 by only the exclusive application or by either the exclusive application or the WEB browser based on restriction of the start-up application stored in the content management table 491. Such restriction of the start-up application is set by the content provider, who is the user of the content registration terminal 20', on a content registration screen 570 which is described later, for example.

Further, in this example, it is determined whether or not content reproduction using a predetermined application is permitted based on restriction of the start-up application, but it is possible to control an application to be activated by various other criteria.

For example, the content management server 40' determines the card type (theme, model number or the like) of the card 10' and the content type indicating the type of the content 5 associated with the card 10' based on the second data 7 received from the content viewing terminal 30. And it is possible to control an application to be activated on the content viewing terminal 30 based on at least any one of those types (to enable the content to be reproduced only by the exclusive application, or to enable the content to be reproduced only by the exclusive application and the WEB browser).

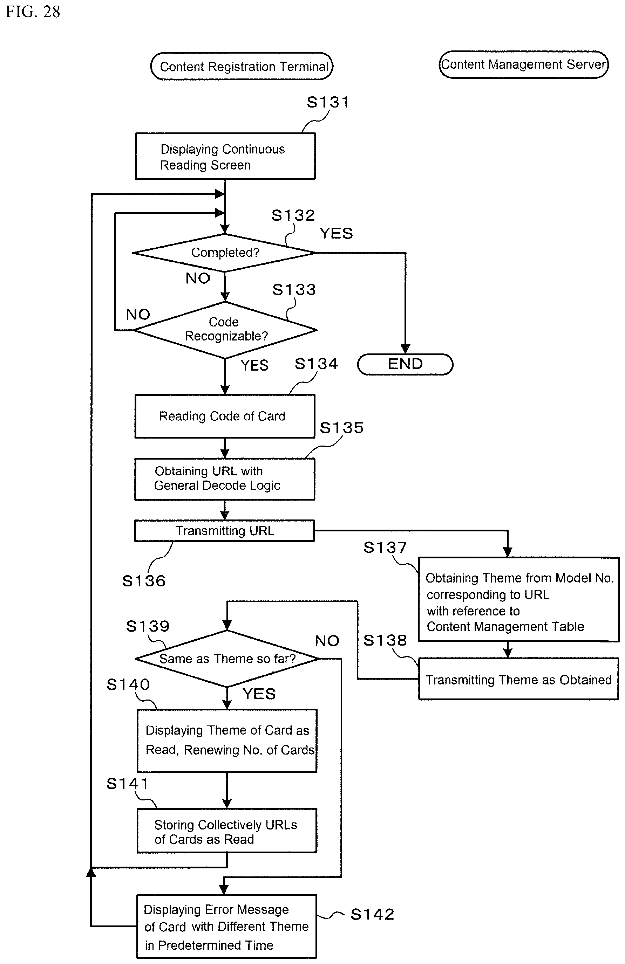

Next, with reference to FIG. 27 and FIG. 28, continuous reading processing (scanning) of the card 10 in the content registration terminal 20 is described. Here, the processing by the content registration terminal 20 of the content management system 1 is described as an example, but the continuous reading processing in the same manner may also be performed in the content registration terminal 20' of the content management system 2.

Further, such continuous reading of the card 10 may be performed at the first timing of being associated with the content 5 (pattern 3 shown in FIG. 3B) and furthermore at a timing after creating/editing the content 5or at a timing of adding a card.

FIG. 27 shows a code reading screen 600 for continuously reading cards on the touch screen 213 of the content registration terminal 20. In the code reading screen 600 of FIG. 27, a captured image display area 601 in which an image captured by the imaging device (the in-camera 203a and the out-camera 203b) is displayed, a reading information display area 602 in which information on the card as read is displayed, and "BACK" icon 603 for shifting to the previous screen are arranged.

Here, the content provider adjusts a position of the content registration terminal 20 (position of the imaging device) so that the code 11 of the card 10 is displayed in the captured image display area 601. Upon reading the code 11 of the card 10, the imaging control unit 253 of the content registration terminal 20 automatically displays a message that the reading of the card 10 has been completed in the code reading screen 600 of the touch screen 213 and renews the display of the number of cards as read in the reading information display area 602. Also, in the reading information display area 602, the theme of the card as read ("Happy Birthday" in the example of FIG. 27) is displayed.

When there is a plurality of cards 10, the content provider allows with the imaging device of the content registration terminal 20 to continuously read these cards 10, whereby the display of the reading information display area 602 is renewed accordingly.

In this way, in a state that the plurality of cards 10 are read, it is possible to associate the content 5 (with all the cards 10 as read). Of course, in the code reading screen 600, it is possible to read only one card 10 and associate the content 5 with that card 10.

Further, in this example, it is assumed on condition that the content 5 in common can be associated when the plurality of cards 10 as read are of the same theme, and the imaging control unit 253 of the content registration terminal 20 displays an error message indicating that the theme of the card 10 as read this time is different when the theme of the card 10 as read is different from the theme of the card 10 read so far.

Here, for example, it is possible to confirm the theme of the card 10 by transmitting the URL obtained from the code 11 of the card 10 by decode processing to the content management server 40 (the theme of the card 10 is grasped based on the model number). Such a correspondence between the URL and the model number is stored in the content management table 461, but it maybe stored in the content registration terminal 20.

Further, the imaging control unit 253 of the content registration terminal 20 may be configured to list, in order of reading every time the code is read, the identification information (for example, the content of the first data 6 (that is, the URL displayed on the card 10 in printing), etc.) of the cards 10 as continuously read. It is possible to provide a check box or the like for each card 10 listed so as to select the card 10 with which the content 5 is to be associated. Therefore, with such a configuration, it is possible to associate the same content 5 with a part of the card 10 as read continuously.

Next, with reference to FIG. 28, a continuous reading processing of the card 10 to be executed by the imaging control unit 253 of the content registration terminal 20 is described. In a flowchart of FIG. 28, the processing of the content registration terminal 20 and the content management server 40 are represented with the lapse of time, respectively. Here, the processing by the content registration terminal 20 of the content management system 1 is described as an example, but the continuous reading processing in the same manner may also be performed in the content registration terminal 20' of the content management system 2.

The imaging control unit 253 of the content registration terminal 20 displays, in accordance with the instruction of the user (content provider), the code reading screen 600 as shown in FIG. 27 on the touch screen of the content registration terminal 20 (Step S131). Next, it is determined whether or not the display of the code reading screen 600 is completed (Step S132). The code reading screen 600 is completed, for example, when the "BACK" icon 603 is touched on the code reading screen 600 shown in FIG. 27, and then the screen is shifted to another screen. The "BACK" icon 603 arranged at the lower left of the code reading screen 600 is an icon for returning to the previous screen.

When the display of the code reading screen 600 is completed (YES in Step S132), the processing in the imaging control unit 253 is completed. When the display of the code reading screen 600 is not completed (NO in Step S132), it is determined whether or not the code 11 of the card 10 is recognizable by the captured image obtained from the imaging device (Step S133). This is, for example, the determination whether or not the position identification pattern at the three corners of the code 11 has been successfully recognized.

When the code 11 is not recognizable (NO in Step S133), the determination whether or not the display of the code reading screen 600 is completed is repeated returning to Step S132. When the code 11 is recognizable (YES in Step S133), the disclosure data area is read (Step S134), and the decode unit 254 decodes the data as read with the general decode logic to obtain the URL (Step S135).

Here, the imaging control unit 253 of the content registration terminal 20 transmits the URL as obtained to the content management server 40 (Step S136), and the content management server 40 obtains, with reference to the content management table 461, the model number corresponding to the URL received from the content registration terminal 20 and obtains the theme of the card 10 based on the model number (Step S137). Next, the content management server 40 transmits the theme as obtained of the card 10 to the content registration terminal 20 (Step S138).

Upon receiving the theme of the card 10 from the content management server 40, the imaging control unit 253 of the content registration terminal 20 determines whether or not the theme is the same as the theme of the cards 10 as continuously read so far (Step S139). When it is the same theme (YES in Step S139), the theme (theme in common) of the card 10 and the number of cards 10 as read are displayed in the reading information display area 602 shown in FIG. 27 (Step S140). Thereafter, the URL of the card 10 as read this time is stored in the auxiliary storage device or the like of the content registration terminal 20 together with the URL of the cards 10 which have been read so far (Step S141), and then the processing returns to Step S132. A plurality of URLs stored in this manner are transmitted as the first data 6 to the content management server 40 to be associated with the content 5 when the registration instruction of the content 5 is made by the content registration terminal 20.

When the theme is not the same as the theme of the cards 10 which have been continuously read so far (NO in Step S139), an error message indicating that the theme of the card 10 as read this time is different is displayed on the touch screen of the content registration terminal 20 (Step S 142), and then the processing returns to Step S132.

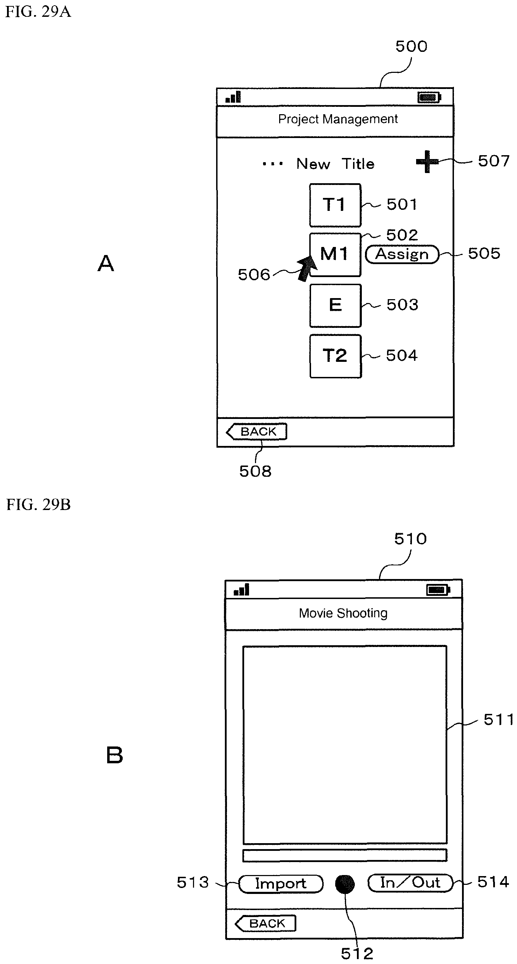

Next, with reference to FIG. 29 to FIG. 31, a flow from creation of the content 5 to registration of the content 5 to the content management server 40' is described based on the screen displayed on the touch screen of the content registration terminal 20'. Here, the content management system 2 is described, but the content management system 1 may also be configured in the same manner when the content 5 is registered in the content management server 40 using the content registration terminal 20.

FIG. 29A shows a project management screen 500 for managing a project to set up data, conditions or the like related to creating/editing of the content 5. The user of the content registration terminal 20' activates the application and selects a menu to create a new content 5. At this time, the user (content provider) of the content registration terminal 20' can create the content 5 from the beginning or create the content 5 using the skin provided according to the theme of the card 10' as read. The themes are, for example, "Happy Birthday", "Thank You", "Merry Xmas".

In the project management screen 500 of FIG. 29A, various icons are prepared so that each of components constituting the content 5 can be defined. For example, a "T1" icon 501 and a "T2" icon 504 are icons for inputting text messages T1 and T2, a "M1" icon 502 is an icon for setting a moving image M1, an "E" icon 503 is an icon for defining an effect E which is an effect (ex., setting of a wallpaper or the like) to be added at the time of the moving image reproduction or the like. Further, a function display 505 ("Assign" in this example, that is, assignment of a moving image) representing a function to be executed when the "M1" icon 502 is selected at the present time is displayed on the right side of the "M1" icon 502.

A "+" icon 507 arranged at the upper right of the project management screen 500 is an icon for adding a component constituting the content 5. A "BACK" icon 508 arranged at the lower left of the project management screen 500 is an icon for returning to the previous screen. Although the "BACK" icon is arranged in common for all the screens described below, it is the same as the function of the "BACK" icon 508, so its explanation is omitted.

Here, when touching the "M1" icon 502 (see an arrow 506), the screen transits to a movie shooting screen 510 shown in FIG. 29B, and the out camera of the content registration terminal 20' is activated. The movie shooting screen 510 is provided with an image display area 511 in which an image being picked up by the camera is displayed. Here, when a recording icon 512 is touched, the movie recording is made, and the moving image data as saved become a component of the content 5 as the moving image M1. When an "Import" icon 513 displayed on the movie shooting screen 510 is touched, it is possible to import the image saved in the auxiliary storage device of the content registration terminal 20' or another computer as a component of the content 5. By touching a "In/Out" icon 514, it is possible to switch between the in-camera and the out-camera of the content registration terminal 20'.

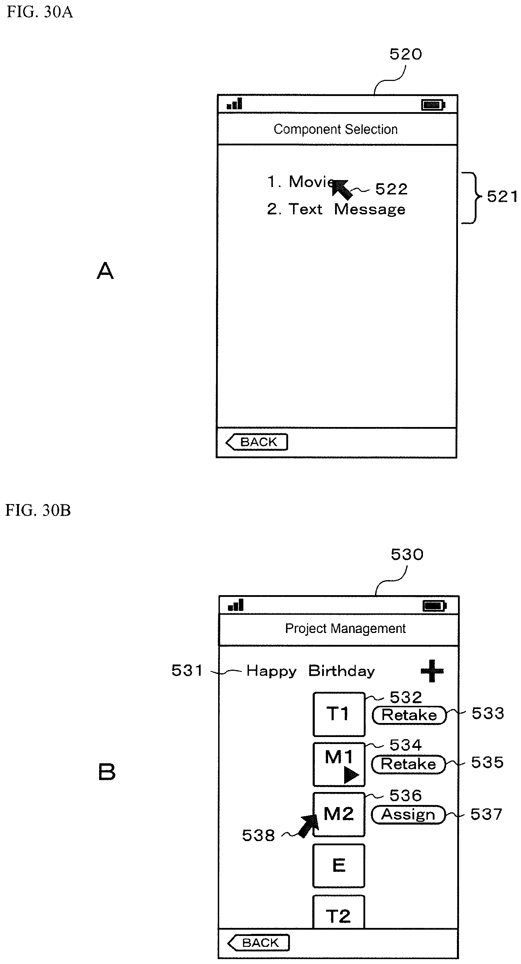

FIG. 30A shows a component selection screen 520 to be displayed when the "+" icon 507 is touched on the project management screen 500 of FIG. 29A. In the component selection screen 520, a menu of components capable of being added is displayed on a menu display 521, and "1. Movie" and "2. Text Message" are set in the menu display 521. Here, when "1. Movie" is selected (see an arrow 522), the screen transits to a project management screen 530 of FIG. 30B.

Since the moving image M2 is added as a component in the project management screen 530 of FIG. 30B, the "M2" icon 536 is added as compared with the project management screen 500 of FIG. 29A. In addition, here, a title 531 is edited and added. In addition, the text message T1 is edited, a "T1" icon 532 is changed from the "T1" icon 501 in FIG. 29A, and further on the right side of the "T1" icon 532, a function display 533 ("Retake", namely, resetting of text message) is displayed.

Since the moving image M1 is set by movie shooting as shown in FIG. 29B, a "M1" icon 534 is changed from the "M1" icon 502 in FIG. 29A, and furthermore, on the right side of the "M1" icon 534, and a function display 535 ("Retake", namely, re-setting of moving image) is displayed. Further, a function display 537 ("Assign", that is, assignment of moving image) is displayed on the right side of the added "M2" icon 536.

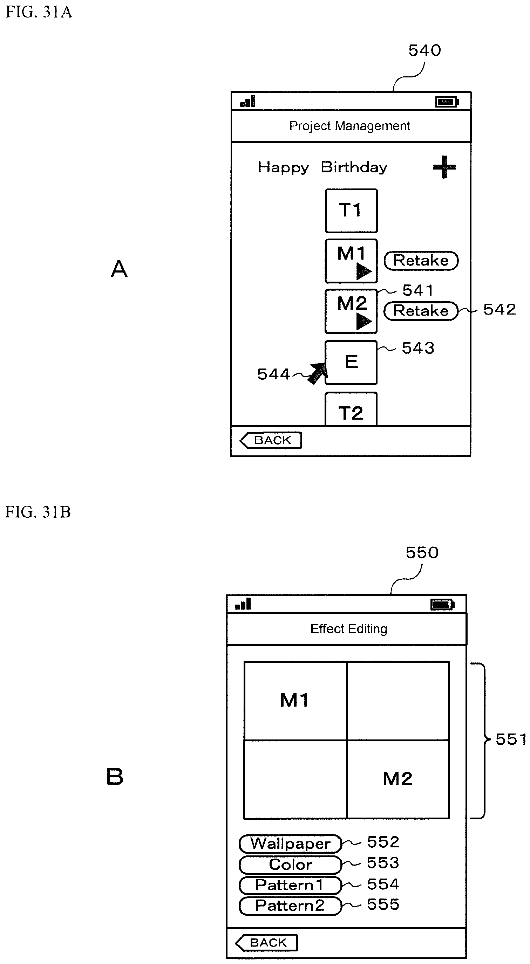

Thereafter, as shown in a project management screen 540 of FIG. 31A, the moving image M2 is set, and a function display 542 ("Retake", that is, resetting of the moving image) is displayed on the right side of a "M2" icon 541. Here, when an "E" icon 543 is touched (see an arrow 544), the screen transits to an effect editing screen 550 of FIG. 31B. On the effect edit screen 550, a content reproduction display 551 on which a preview of the content 5 and various effects (in this example, a "Wallpaper" effect 552, a "Color" effect 553, a "Pattern 1" effect 554, a "Pattern 2" effect 555) are displayed, and when the user selects one of the effects, the content of the effect is reflected on the display in the content reproduction display 551.

When the content 5 is created and/or edited as described above, the user selects a menu and displays a destination selection screen 560 of FIG. 32A on the touch screen of the content registration terminal 20'. On the destination selection screen 560, a menu display 561 is displayed, and destinations of the content 5 can be selected from five options. In this example, "1. Card" (card 10), "2. Address" (address of SMS), "3. E-mail" (electronic mail), "4. SNS1" and "5. SNS2" are set. Here, if "1. Card" is selected (see an arrow 562), the screen transits to a code reading screen 600 for reading one of the code 12 of the card 10' or one by one continuously as shown in FIG 27.

In addition, the user (content provider) selects a menu in the content registration terminal 20' and displays a content registration screen 570 as shown in FIG. 32B. On the content registration screen 570, a card counts display area 571, a content display area 572, a startup application restriction designation area 573, and a "Registration" icon 574 are displayed.

In the card count display area 571, the count of cards stored by reading on the code reading screen 600 is displayed. In the card count display area 571, information for specifying the content 5 to be associated with the card 10', that is, information (here, the file name of the content 5) for specifying the content 5 created/edited by various screens including the project management screen 500 is displayed.

In the startup application restriction designation area 573, a check box for designating whether or not to limit the application capable of reproducing the content 5 to a specific one when viewing the content 5 on the content viewing terminal 30 is shown, the user of the content registration terminal 20' who is the content provider can check this check box as necessary. Here, by touching the "Registration" icon 574, the designated content 5 is associated with the card 10' as read, and this relation is stored in the content management table 491 of the content management server 40'.

Up to this point, the characteristic configuration of the present invention has been described with reference to the content management system 1 according to the First Embodiment of the present invention and the content management system 2 according to the Second Embodiment thereof, but these embodiments are just embodiments. The content management system of the present invention can be realized by various configurations other than the above within the scope of the present invention.

### Industrial Applicability

In the content management system according to the present invention, a content can be associated with a card to which an individual code is attached in advance by an easy operation using the code, and therefore, issue, distribution, usage of such card are promoted.

## Claims

1. A content management system comprising:
a first user terminal in use by a first user; and
a content management server connected via a network to the first user terminal,
the content management server comprising:
medium-related data storage means of having stored medium-related data corresponding to each medium capable of associating a content therewith before performing association between the content and the medium;
first data receiving means of receiving first data, the first data being obtained from the medium, from the first user terminal;
medium determination means of determining normality of the medium under conditions including a condition that a code obtained from the first data matches with one of the medium-related data stored in the medium-related data storage means; and
content management means of controlling the content designated by the first user to associate with any medium corresponding to the medium-related data matching with the code obtained from the first data in accordance with registration instruction of the first user to be provided from the first user terminal,
wherein the medium has a physical shape and is provided to the first user in a state that the content is not associated therewith.

2. The content management system according to claim 1, wherein
the content management server further comprises:
second data receiving means of receiving second data, the second data being obtained from the medium by a second user terminal in use by a second user different from the first user, from the second user terminal; and
content transmitting means of, when a code obtained from the second data matches with one of the medium-related data stored in the medium-related data storage means, transmitting the content associated with the medium corresponding to the medium-related data as matched to the second user terminal for reproduction.

3. The content management system according to claim 1 or 2, wherein:
the first data is obtained by reading a medium code from the medium;
the code obtained from the first data includes a first identification code corresponding to a first part of the first data and a second identification code obtained based on a second part of the first data;
the first part of the first data is data obtained by decoding a part of the medium code with a known decode method; and
the second part of the first data is encoded data.

4. The content management system according to claim 3, wherein:
the first identification code of the first data is URL data;
the second data is obtained by reading the medium code from the medium and the second data is data obtained by decoding a part of the medium code with a known decode method; and
the first data obtained from the first user terminal and the second data obtained from the second user terminal are different data even though they are related to the same medium.

5. The content management system according to claim 3, wherein
the content management server further comprises:
first data transmission means of transmitting the second part of the first data to another computer so as to obtain the second identification code; and
second identification code receiving means of receiving the second identification code as a result of decode from the another computer.

6. The content management system according to claim 1 or 2, wherein:
the first data is obtained by reading a medium code from the medium; and
the first user terminal comprises:
display means of displaying information;
first data obtaining means of obtaining the first data from the medium when reading instruction of the medium code is performed by the first user; and
information display control means of, when the first user continuously performs the reading instruction with respect to a plurality of media, displaying at least one of the number of the media as read and medium identification information obtained based on the first data individually obtained in accordance with the reading instruction on the display means.

7. The content management system according to claim 6, wherein:
the first user terminal transmits, when the first user performs the registration instruction, a plurality of first data corresponding to the media as continuously read and the content designated by the first user in association with each other to the content management server.

8. The content management system according to claim 1 or 2, wherein:
the medium is classified in accordance with a plurality of first types; and
the content management server further comprises:
first type determination means of, when the first data obtained by the first user terminal is received by the first data receiving unit of the content management server, determining the first type of the medium based on the first data; and
content-related data control means of controlling content-related data corresponding to the first type determined by the first type determination means to be available in the first user terminal.

9. The content management system according to claim 2, wherein:
the content associated with the medium is reproduced under a reproduction condition designated by the first user at the time of the registration instruction; and
the content management server further comprises:
reproduction condition determination means of, when the second data obtained by the second user terminal is received by the second data receiving unit of the content management server, determining the reproduction condition of the content associated with the medium based on the second data; and
content reproduction control means of performing control to change the reproduction condition of the content in the second user terminal in accordance with the reproduction condition determined by the reproduction condition determination means.

10. The content management system according to claim 2, wherein:
the content associated with the medium is classified into a plurality of second types,
the content management server further comprises,
second type determination means of, when the second data obtained by the second user terminal is received by the second data receiving unit of the content management server, determining the second type of the content associated with the medium based on the second data,
content reproduction control means of performing control to change the reproduction condition of the content in the second user terminal in accordance with the second type determined by the second type determination means.

11. A content management method of being executed in a content management system comprising a content management server connected to a first user terminal used by a first user via a network,
the content management server comprising medium-related data storage means of having stored medium-related data corresponding to each medium capable of associating a content therewith before performing association between the content and the medium,
the method comprising in the content management server:
a first data receiving step of receiving a first data, the first data being obtained from the medium, from the first user terminal;
a medium determination step of determining normality of the medium under conditions including a condition that a code obtained from the first data matches with one of the medium-related data stored in the medium-related data storage means; and
a content management step of controlling the content designated by the first user to associate with any medium corresponding to the medium-related data matching with the code obtained from the first data in accordance with registration instruction of the first user to be provided from the first user terminal,
wherein the medium has a physical shape and is provided to the first user in a state that the content is not associated therewith.
